(19) **Europäisches Patentamt / European Patent Office / Office européen des brevets**

(11) **EP 2 299 728 B1**

(12) **EUROPEAN PATENT SPECIFICATION**

(45) Date of publication and mention
of the grant of the patent:
**17.04.2013 Bulletin 2013/16**

(51) Int Cl.:
***H04N 13/00*** (2006.01)      ***G06K 9/00*** (2006.01)

(21) Application number: **10251603.6**

(22) Date of filing: **15.09.2010**

(54) **Stereoscopic image display apparatus**

Stereoskopische Bildanzeigevorrichtung

Appareil d'affichage d'images stéréoscopiques

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.09.2009 JP 2009214605**

(43) Date of publication of application:
**23.03.2011 Bulletin 2011/12**

(60) Divisional application:
**11009168.3 / 2 429 200**

(73) Proprietor: **FUJIFILM Corporation**
**Tokyo 106-8620 (JP)**

(72) Inventor: **Kubota, Masakatsu**
**Saitama-shi**
**Saitama 331-9624 (JP)**

(74) Representative: **Stevens, Jason Paul**
**Dehns**
**St Bride's House**
**10 Salisbury Square**
**London**
**EC4Y 8JD (GB)**

(56) References cited:
**WO-A2-01/69944**      **WO-A2-2007/019842**
**DE-A1-102007 028 654**      **GB-A- 2 404 106**
**JP-A- 9 018 894**      **US-A1- 2006 215 261**

## Description

The present invention relates to a stereoscopic image display apparatus, and more particularly to a stereoscopic image display apparatus by which a stereoscopic image formed of left eye and right eye images having parallax therebetween is displayed so as to be able to be viewed stereoscopically.

In a stereoscopic image display apparatus of this type, parallax between left eye and right eye images needs to be increased in order to enhance the stereoscopic effect and the sense of reality. However, the stereoscopic image display apparatus has a problem that when the binocular parallax exceeds the fusion limit of the viewer, the images cannot be stereoscopically viewed.

Here, the left and right eye images having parallax therebetween respectively enter the left and right eyes of the viewer, and the parallax images are fused in the brain, so that the viewer can recognize the images as a stereoscopic image. However, when the binocular parallax between the two parallax images is too large, the two parallax images are not fused and viewed as a double image, which may cause asthenopia.

Japanese Examined Application Publication No. 3771964 discloses a technique which detects a focus adjustment state (visual distance) of the eyeballs of the viewer viewing left eye and right eye images and adjusts a shift amount of the left eye and right eye images so that the visual distance becomes a target value, and also discloses a technique which detects a convergence angle of the eyeballs of the viewer viewing left eye and right eye images and adjusts the shift amount of the left eye and right eye images so that the convergence angle becomes a target value.

Further, Japanese Patent Application Laid-Open No. 9-74573 discloses a stereoscopic CG image generation apparatus which calculates a binocular fusion range of the viewer based on a screen size of a stereoscopic image display apparatus and on the basis of the visual distance between the screen and the viewer, determines camera parameters so that the whole part of a subject is included in the viewer's binocular fusion range, and generates a plurality of two-dimensional projection images (natural and easily visible stereoscopic image) by using the determined camera parameters.

Japanese Patent Application Laid-Open No. 2004-165709 describes a technique which measures a display time of a stereoscopic image and, when the measured display time of the stereoscopic image exceeds a predetermined time, displays the stereoscopic image as a plane image. Thereby, the viewer is protected so that the level of asthenopia of the viewer does not become excessive.

In the stereoscopic display method by which each of images having binocular parallax therebetween is displayed for each of the left and right eyes so that the images can be stereoscopically viewed, an image leakage (crosstalk) is generated between the left and right images depending on a separation degree of the left and right images. This causes degradation in the quality of the image as a stereoscopic image.

Japanese Patent Application Laid-Open No. 2001-186549 discloses a stereoscopic display crosstalk amount measuring apparatus which measures an amount of crosstalk from one of the left and right images to the other of the left and right images. Further, Japanese Patent Application Laid-Open No. 2004-312780 describes a technique which reduces the amount of crosstalk.

It is known that the binocular fusion limit is significantly different among individuals. However, the invention described in Japanese Examined Application Publication No. 3771964 is just intended to adjust the shift amounts of the left eye and right eye images so that the visual distance and the convergence angle of the eyeballs of a viewer viewing a stereoscopic image become desired values, and does not involve the idea of controlling the parallax between the left eye and right eye images according to a fusion limit of each viewer.

In the invention described in Japanese Patent Application Laid-Open No. 9-74573, a stereographic CG (Computer Graphics) image is generated so that the whole part of a subject is included in the binocular fusion range of a viewer, but the stereoscopic CG image is not generated according to the fusion limit which is different for each viewer. In particular, since the fusion limit is different for each viewer, there is a problem that when a stereoscopic image is generated according to the fusion limit of all viewers, the generated stereoscopic image lacks stereoscopic effect and a sense of reality.

In the invention described in Japanese Patent Application Laid-Open No. 2004-165709, a stereoscopic image is switched to a plane image on the basis of the measured viewing time of the stereoscopic image in order to cope with asthenopia of a viewer viewing the stereoscopic image. However, the switching of the images is not performed according to an actual level of fatigue. Thus, even when viewing a stereoscopic image causing less fatigue, the viewer cannot experience the stereoscopic effect for a long time, while when viewing a stereoscopic image causing greater fatigue, asthenopia of the viewer may be increased more than expected.

In the invention described in Japanese Patent Application Laid-Open No. 2001-186549, the crosstalk of a stereoscopic image in various stereoscopic display methods can be measured, but it is not possible to check whether or not a stereoscopic image, which is properly viewed in a certain stereoscopic display method, can be properly viewed in another stereoscopic display method in which a larger amount of crosstalk is generated.

In the invention described in DE 10 2007 028 654 the information about the pupil width is used to control the parallax between the left and right images.

The present invention has been made in view of the above described circumstances. An object of at least the preferred embodiments of the present invention is to provide a stereoscopic image display apparatus which can display, for each viewer, a stereoscopic image not exceeding the fusion limit of the viewer, and can also accurately measure the level of asthenopia of the viewer so as to thereby suppress the level of asthenopia of the viewer to a fixed level or less, and can further check beforehand the stereoscopic image quality based on the amount of crosstalk which is different for each of various stereoscopic display methods.

To this end, a stereoscopic image display apparatus according to a first aspect of the present invention is defined in claim 1.

According to the first aspect of the present invention, while left eye and right eye images (images for measurement) having continuously or stepwise changing parallax therebetween are outputted beforehand to the stereoscopic image display device, the fusion limit of the viewer is measured by measuring the pupil width of the viewer viewing the images for measurement. Then, when a stereoscopic image for appreciation is displayed, the parallax of the stereoscopic image (between the left eye and right eye images) is controlled so as not to exceed the viewer's fusion limit measured beforehand. Thereby, it is possible to stably provide a stereoscopic image, in which the stereoscopic effect and the sense of reality are maximized for each viewer.

According to a second aspect of the present invention, the stereoscopic image display apparatus according to the first aspect further includes: a face recognizing device which recognizes the face of the viewer from the face image acquired by the photographing; and a registering device which registers, in a storage device, the acquired information about the fusion limit of the viewer in association with the recognized face, wherein when the viewer's face recognized by the face recognizing device is the face which has been registered by the registering device, the information acquiring device acquires the information about the fusion limit by reading out, from the storage device, the information about the fusion limit registered in association with the face.

The information about the viewer's fusion limit is registered in the storage unit in association with the recognized face of the viewer. Thus, when the viewer is individually specified from the viewer's face image and then the viewer's fusion limit registered beforehand is read out, there is an advantage that it is not necessary to measure the viewer's fusion limit each time.

According to a third aspect of the present invention, in the stereoscopic image display apparatus according to one of the first and second aspects, only during a period in which the information about the fusion limit of the viewer is acquired, the power source of the imaging device is turned on so as to enable the imaging device to photograph the viewer. Thereby, power consumption can be suppressed.

According to a fourth aspect of the present invention, the stereoscopic image display apparatus according to one of the first to third aspects, further includes: an integration device which integrates, with respect to a display time of stereoscopic image, an amount of change in the pupil width of the viewer from a prescribed value of pupil width, on the basis of the pupil width of the viewer which is measured by the pupil width measuring device while the viewer views the stereoscopic image displayed on the stereoscopic image display device; a threshold setting device which sets a threshold value used as a reference for determination of a level of asthenopia of the viewer viewing the stereoscopic image; and a stopping device which, when the integrated value exceeds the set threshold value, stops displaying the stereoscopic image performed by the stereoscopic image display device.

According to the fourth aspect of the present invention, since the level of asthenopia of the viewer can be accurately measured, the level of asthenopia of the viewer can be suppressed to a fixed level or less, and also a stereoscopic image, which less causes asthenopia of the viewer, can be viewed by the viewer for a long time.

According to a fifth aspect of the present invention, in the stereoscopic image display apparatus according to the fourth aspect, the stopping device allows only one of the left eye and right eye images to be displayed on the stereoscopic image display device in place of the stereoscopic image formed of the left eye and right eye images. That is, in the fifth aspect of the present invention, it is configured such that, when the level of asthenopia of the viewer reaches the threshold value set beforehand, only one of the left eye and right eye images (two-dimensional images) is displayed to thereby enable the viewer to recover from asthenopia.

According to a sixth aspect of the present invention, the stereoscopic image display apparatus according to one of the first to fifth aspects, further includes: a crosstalk amount setting device which sets a ratio of the right eye image mixed into the left eye image and which sets a ratio of the left eye image mixed into the right eye image; and an image mixing device which generates left eye and right eye images including the crosstalk by mixing, according to the set ratios, the left eye and right eye images acquired by the image acquiring device, wherein the first control device controls the stereoscopic image display device to display a stereoscopic image formed of the left eye and right eye images including the crosstalk, on the basis of the generated left eye and right images including the crosstalk

According to the sixth aspect of the present invention, the crosstalk can be intentionally generated. Thus, when the content of a specific stereoscopic image is viewed by the other three-dimensional display method, the level of stereoscopic viewing quality can be checked beforehand without using the other three-dimensional display apparatus.

According to a seventh aspect of the present invention, in the stereoscopic image display apparatus according to one of the first to fifth aspects, the stereoscopic image display device includes: an image display device which displays left eye and right eye images by switching the left eye and right eye images alternately; and stereoscopic viewing eyeglasses which can switch, alternately, transmittance of light beams respectively entering the left and right eyes of the viewer, and the first display control device which controls the image display device to display the left eye and right eye images acquired by the image acquiring device alternately at a predetermined period, and which controls the transmittance of the stereoscopic viewing eyeglasses to switch alternately at the predetermined period.

According to an eighth aspect of the present invention, the stereoscopic image display apparatus according to the seventh aspect, further includes: a crosstalk amount setting device which sets a ratio of the right eye image mixed into the left eye image and which sets a ratio of the left eye image mixed into the right eye image; and a phase control device which shifts, based on the ratios set by the crosstalk amount setting device, the switching timing of the left eye and right eye images displayed on the image display device from the switching timing of the transmittance of the stereoscopic viewing eyeglasses.

According to a ninth aspect of the present invention, the stereoscopic image display apparatus according to the seventh aspect, further includes: a crosstalk amount setting device which sets a ratio of the right eye image mixed into the left eye image and which sets a ratio of the left eye image mixed into the right eye image; and a transmittance control device which controls the ratios of the transmittance of the right and left stereoscopic viewing eyeglasses on the basis of the ratios set by the crosstalk amount setting device.

According to the present invention, the fusion limit of each viewer is measured beforehand, and a stereoscopic image is outputted while the parallax of the stereoscopic image is controlled so as not to exceed the fusion limit of the viewer. Thereby, it is possible to provide a stereoscopic image which can be viewed by each viewer in the state where the stereoscopic effect and the sense of reality are maximized for the viewer. Further, the level of asthenopia of the viewer can be accurately measured, and thus the level of asthenopia of the viewer can be suppressed to a fixed level or less. Also, in the case of a stereoscopic image less causing asthenopia, the viewer can view the stereoscopic image for a long time. Further, the crosstalk can be intentionally generated. Thus, when the contents of a specific stereoscopic image is viewed by using another three-dimensional display apparatus, the level of stereoscopic viewing quality can be estimated beforehand without using the other three-dimensional display apparatus.

Preferred embodiments will now be described by way of example only and with reference to the accompanying drawings, in which:

Fig. 1 is an external view of a stereoscopic image display apparatus according to the present invention;
Fig. 2 is a block diagram showing an internal configuration of the stereoscopic image display apparatus;
Fig. 3 is a schematic diagram of a display apparatus of a parallax barrier system;
Fig. 4 is a figure showing a principle of stereoscopic display of the parallax barrier system;
Fig. 5 shows plan views of a left eye image (L image) and a right eye image (R image) which have parallax therebetween, and a stereoscopic display image;
Fig. 6 is a flow chart showing a flow of overall control of a first embodiment according to the present invention;
Fig. 7 is a flow chart used for explaining a method to acquire information on the fusion limit of a viewer;
Fig. 8A to Fig. 8C are schematic diagrams each showing a relationship between positions of pupils in both eyes of a viewer and a 3D image which is displayed on a stereoscopic image display unit and which is used for measuring the fusion limit;
Fig. 9 is a schematic diagram showing a relationship between the positions of pupils in both eyes of the viewer and a 3D image for the fusion limit measurement, which illustrates a state where the convergence angle of eyeballs of the viewer reaches a limit;
Fig. 10 is a figure showing a relationship between two cameras and a distance to a subject at the time of photographing a stereoscopic image;
Fig. 11A to Fig. 11C are figures each showing an image which is acquired when the subject located at a different photographing distance is photographed in the camera arrangement as shown in Fig. 10;
Fig. 12 is a flow chart showing a second embodiment according to the present invention;
Figs. 13A to 13C are figures used to explain a method for acquiring information representing a level of asthenopia of the viewer viewing a stereoscopic image;
Fig. 14 is a block diagram showing an internal configuration of a stereoscopic image display apparatus according to a third embodiment;
Fig. 15 is a figure showing an example of a menu screen of a stereoscopic image quality simulation;
Figs. 16A to 16D are figures showing an original stereoscopic image, and stereoscopic images in each of which the amount of crosstalk is increased;
Fig. 17 is a block diagram showing an internal configuration of a stereoscopic image display apparatus of a modification of the third embodiment;
Fig. 18 is a graph showing a relationship between a control level and a transmittance of liquid crystal shutter eyeglasses;
Fig. 19 is a timing chart which shows the left and right image output timing and the control timing of the liquid crystal shutter eyeglasses at the normal time;
Fig. 20 is a timing chart which shows the left and right image output timing and the control timing of the liquid crystal shutter eyeglasses in the case where the amount of crosstalk is increased; and Fig. 21 is a figure showing the control of the transmittance of the liquid crystal shutter eyeglasses in the case where the amount of crosstalk is increased.

In the following, embodiments of a stereoscopic image display apparatus according to the present invention will be described with reference to the accompanying drawings.

[Configuration of stereoscopic image display apparatus]

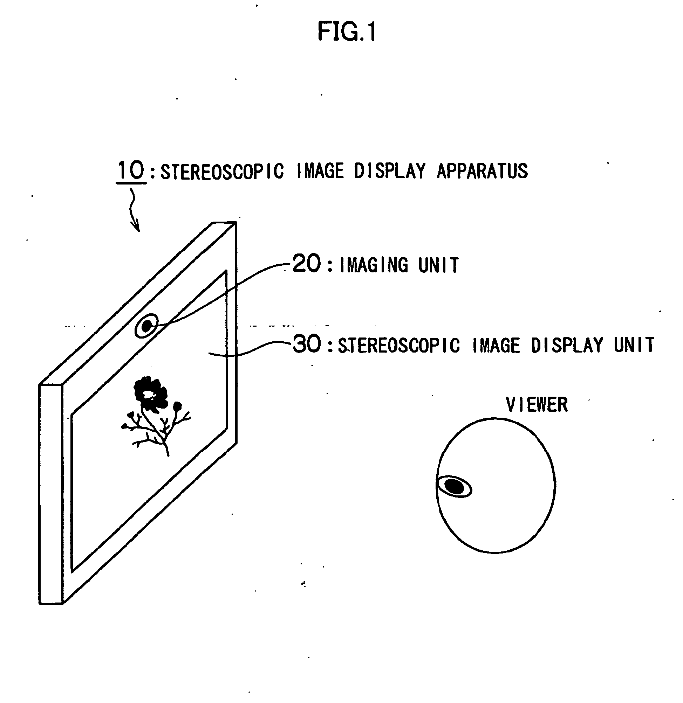

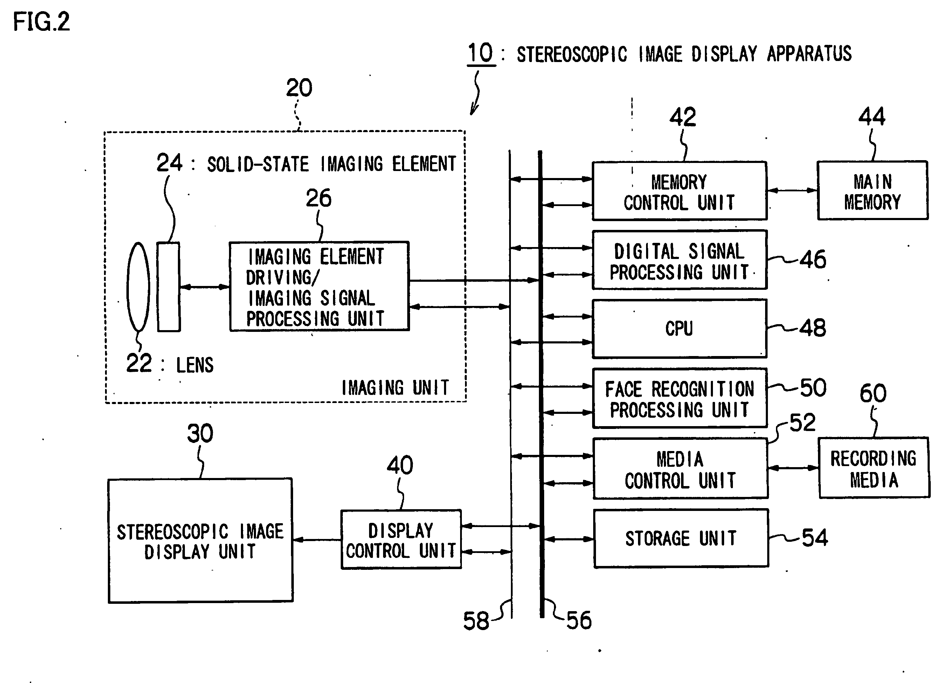

Fig. 1 is an external view of a stereoscopic image display apparatus according to the present invention, and Fig. 2 is a block diagram showing an internal configuration of the stereoscopic image display apparatus.

The stereoscopic image display apparatus 10 includes an imaging unit 20, a stereoscopic image display unit 30, a display control unit 40, a memory control unit 42, a main memory 44, a digital signal processing unit 46, a central processing unit (CPU) 48, a face recognition processing unit 50, a media control unit 52, and a storage unit 54, and these are connected to each other via a data bus 56 and a control bus 58.

As shown in Fig. 1, the imaging unit 20 is arranged at an upper portion of the stereoscopic image display apparatus 10 in order to photograph a face of a viewer. The imaging unit 20, whose imaging operation is controlled by a command from the CPU 48, is mainly configured by an imaging lens 22, the solid-state imaging element 24, such as a CCD, and an imaging element driving/imaging signal processing unit 26.

An optical image (including the face of the viewer) of the subject imaged on the light receiving surface of the solid-state imaging element 24 via the imaging lens 22 is subjected to photoelectric conversion by the solid-state imaging element 24, and is read, as an image signal, by the imaging element driving/imaging signal processing unit 26. The read image signal is subjected, by the imaging element driving/imaging signal processing unit 26, to analogue processing, such as amplification, as well as to A/D conversion, and thereafter is once stored in the main memory 44 via the data bus 56 and the memory control unit 42.

The digital signal processing unit 46 performs processing, such as expansion processing, size conversion processing, and image quality correction processing, to a compressed still or moving image read from a recording medium 60 via the media control unit 52, in addition to the image quality correction processing, and the like, of the image signal stored in the main memory 44.

The face recognition processing unit 50 detects the face of the viewer from the image which is photographed by the imaging unit 20 and which includes the face of the viewer, and also recognizes the face (specifies the viewer) on the basis of the characteristic amounts of the detected face.

The face detection is performed in such a manner that while the position of a predetermined target area is moved within the photographed image including the face of the viewer, the image of the target area is collated with a face image template to check correlation between the image of the target area and the face image template, and that, when the obtained correlation score exceeds a threshold value set beforehand, the target area is detected as a face area. In addition, it is possible to use, as the face detecting method, known methods, such as the face detecting method based on the edge detection or the shape pattern detection, and the face detecting method based on the hue detection, or the skin colour detection.

Further, the face recognition of the detected face is performed in such a manner that the main component analysis results of the detected face image and characteristic amounts such as a size of face parts such as eyes, a nose, and a mouth, and a space between the face parts, are obtained for each of the viewers and registered in the storage unit 54, and then the viewer is specified according to the matching degree between the characteristic amounts obtained from the face in the photographed image and the characteristic amounts of the face of the viewer registered in the storage unit 54.

Further, the face recognition processing unit 50 detects the position of the left and right pupils of the viewer viewing a stereoscopic image. Note that a method of utilizing the detected position of the left and right pupils will be described below.

Further, the information on the binocular fusion limit of each viewer is registered in the storage unit 54 in association with the characteristic amounts of the face (or in association with the face image) of the viewer. Further, a stereoscopic image for measurement, which is used to measure the fusion limit of a viewer and has continuously or stepwise changing parallax, is stored in the storage unit 54, and is read at the time of measuring the fusion limit of the viewer, and displayed on the stereoscopic image display unit 30. Note that the details of the measuring method of the fusion limit of each viewer will be described below.

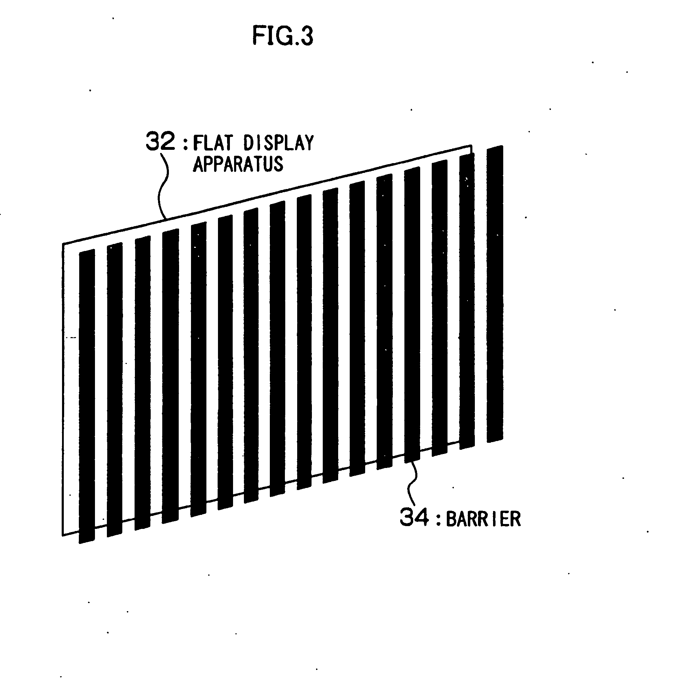

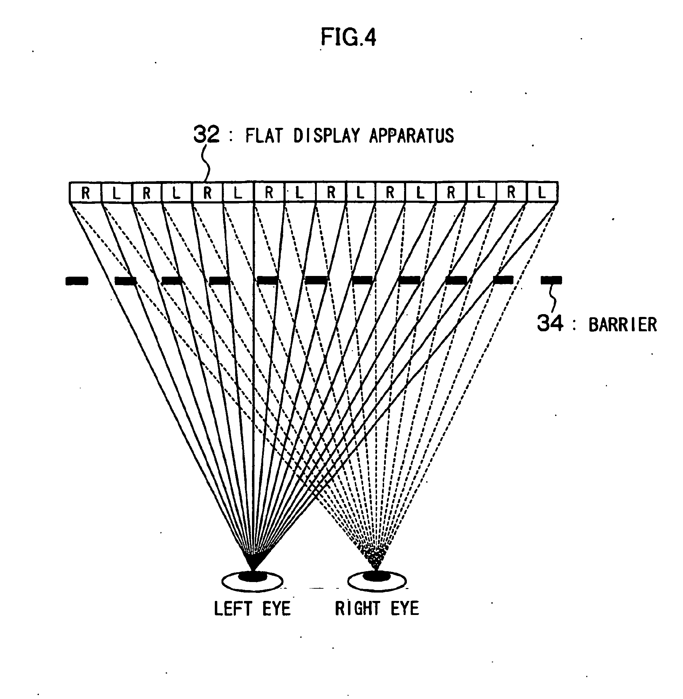

The stereoscopic image display unit 30 is, for example, a type of parallax barrier system, and configured such that, as shown in Fig. 3 and Fig. 4, a barrier 34 provided with vertical slits is arranged on a front side of a flat display apparatus 32 such as a liquid crystal display. The stereoscopic image display unit 30 can display a stereoscopic image having parallax.

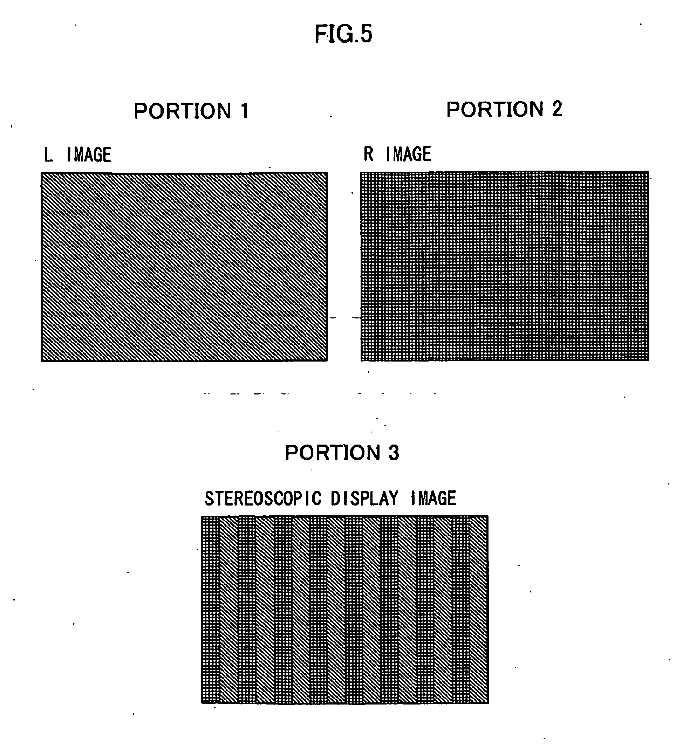

That is, a stereoscopic display image, shown in Portion 3 of Fig. 5, in which pixels of a left eye image (L image), shown in Portion 1 of Fig. 5, and pixels of a right eye image (R image), shown in Portion 2 of Fig. 5, are alternately arranged is synthesized from the L image and the R image that have parallax therebetween as shown in Fig. 5. And, when the synthesized stereoscopic image is displayed on the flat display apparatus 32, as shown in Fig. 4, the barrier 34 functions to enable only the L image to be viewed by the left eye and also functions to enable only the R image to be viewed by the right eye.

The display control unit 40 controls the stereoscopic image display unit 30 to display the stereoscopic display image. In addition, the display control unit 40 controls to display a stereoscopic display image with the amount of parallax between the L image and the R image adjusted according to a command from the CPU 48, or controls to display one (two-dimensional (2D) image) of the L image and the R image. Note that it is preferred that the barrier 34 is configured by a liquid crystal, and the like, and that the barrier 34 is made transparent at the time of displaying a 2D image.

[First embodiment]

Next, a first embodiment of a stereoscopic image display apparatus according to the present invention will be described.

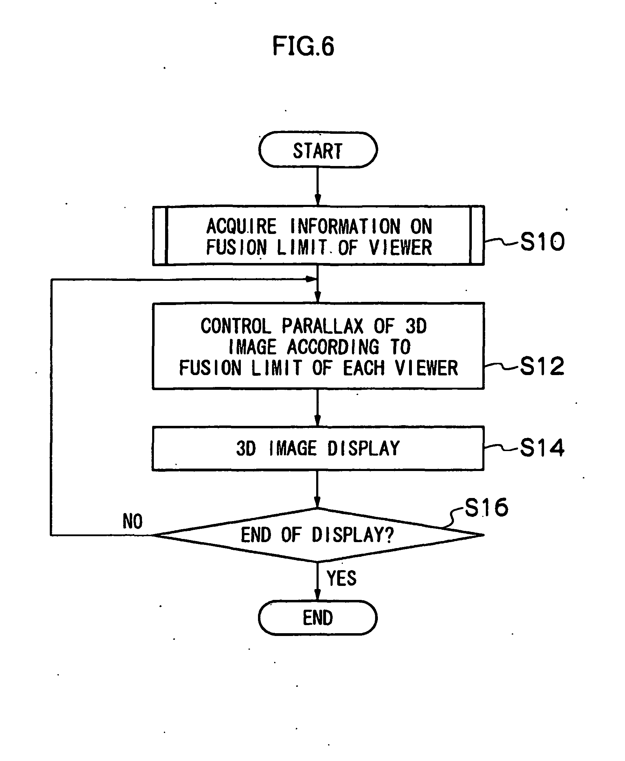

As shown in Fig. 6, when a stereoscopic image (for example, a slide show of 3D still images and a 3D moving image) is displayed by the stereoscopic image display apparatus, the information on the fusion limit of a viewer is first acquired (step S10).

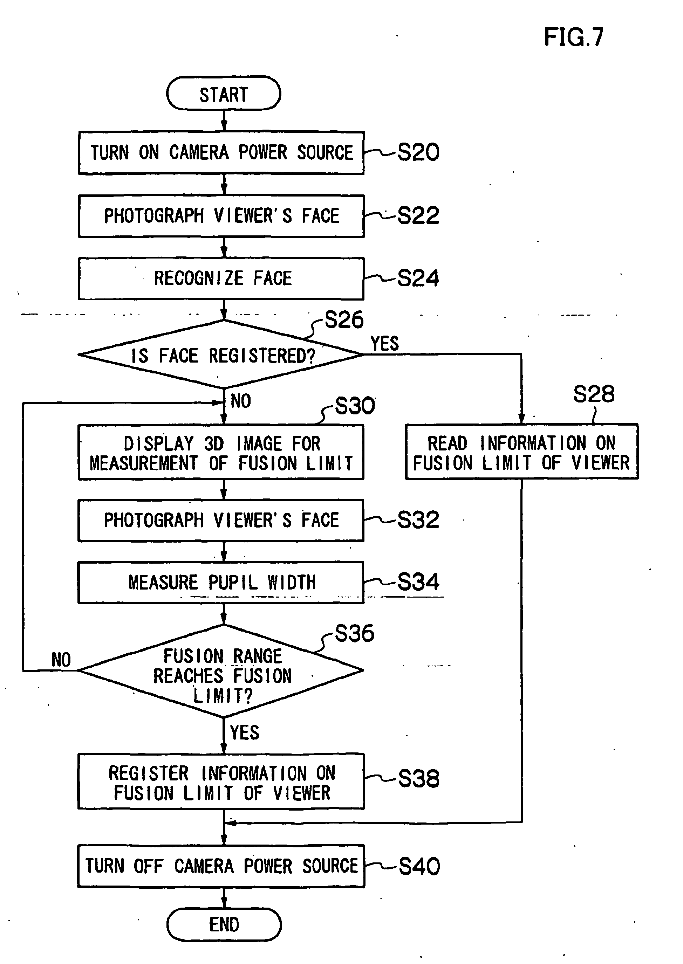

The method for acquiring the information on the fusion limit of the viewer will be described with reference to Fig. 7.

The CPU 48 turns on the power source of the camera (imaging unit 20) mounted on the stereoscopic image display apparatus 10 (step S20), and makes the camera photograph the viewer (including the face of the viewer) (step S22). The face recognition processing unit 50 detects a face image from the photographed image, and performs face recognition on the basis of the characteristic amounts of the detected face image (step S24).

When it is determined that the face of the viewer is the one whose fusion limit has already been registered, the CPU 48 reads, from the storage unit 54, the information on the fusion limit of the corresponding viewer (step S28), and thereafter turns off the power source of the camera (step S40).

On the other hand, when it is determined that the face of the viewer is not the one whose fusion limit has already been registered, the CPU 48 reads the 3D image for fusion limit measurement from the storage unit 54, and makes the 3D image for fusion limit measurement displayed on the stereoscopic image display unit 30 (step S30).

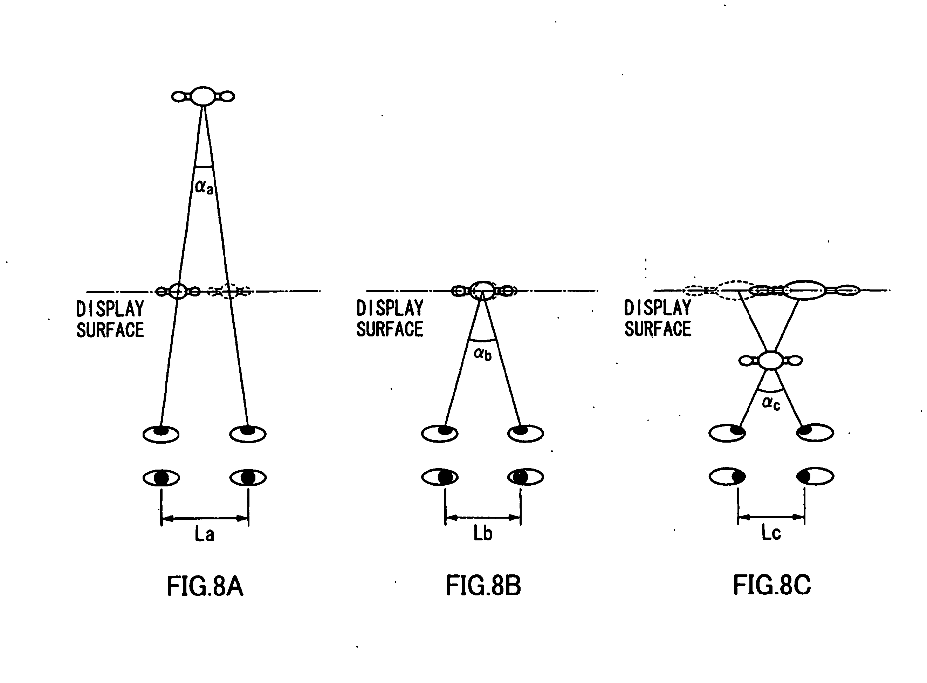

Fig. 8A to Fig. 8C are schematic diagrams each showing a relationship between the positions of the pupils of both eyes of the viewer and the 3D image for fusion limit measurement (in which the solid line shows the L image and in which the broken line shows the R image) which is displayed on the stereoscopic image display unit 30.

When there is almost no parallax between the L image and the R image as shown in Fig. 8B, the observed subject is recognized to be located near the surface of the display surface, and the convergence angle of the eyeballs $\alpha_b$ becomes an angle formed by the left and right lines of sight which intersect each other on the display surface.

On the other hand, when parallax for the subject exists in a depth direction as shown in Fig. 8A, the convergence angle of the eyeballs $\alpha_a$ becomes an angle formed by the left and right lines of sight which intersect each other at the imaginary point located on the deeper side from the display surface. On the contrary, when parallax for the subject exists in a pop-up direction (near side direction) from the display surface as shown in Fig. 8C, the convergence angle of the eyeballs $\alpha_c$ becomes an angle formed by the left and right lines of sight which intersect each other at the imaginary point located on the front side from the display surface. The relationship between the convergence angles of the eyeballs $\alpha_a$, $\alpha_b$, $\alpha_c$ is expressed as $\alpha_a < \alpha_b < \alpha_c$. Further, the convergence angles of the eyeballs $\alpha_a$, $\alpha_b$, $\alpha_c$ and the width between the left and right pupils (pupil width) $L_a$, $L_b$, and $L_c$ have a fixed relationship as expressed as $L_a > L_b > L_c$.

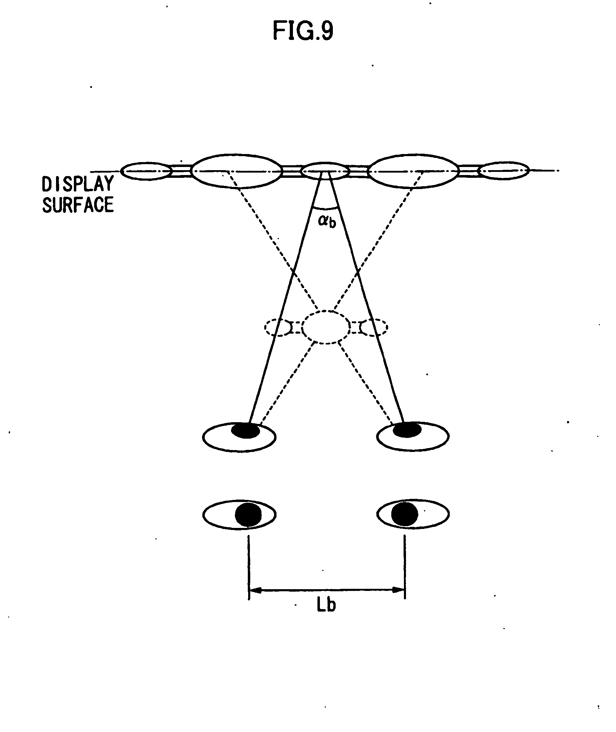

When parallax is gradually increased in the pop-up direction of the 3D image for measurement, at a point where the convergence angle of the eyeballs of the viewer reaches a limit, the viewer cannot view the image as a stereoscopic image and views the image as a double image on the display surface as shown in Fig. 9. The convergence angle of the eyeballs $\alpha_b$ and the pupil width $L_b$ at this point are the same as those shown in Fig. 8B in the case where the parallax is small.

The CPU 48 controls to display the 3D image for measurement having gradually changing parallax on the stereoscopic image display unit 30 (step S30), and also measures the pupil width of the viewer by photographing the face of the viewer (step S32, S34).

Then, the CPU 48 determines, on the basis of the relationship between the amount of parallax of the displayed 3D image for measurement and the pupil width, whether or not the binocular fusion range of the viewer reaches the fusion limit (step S36). The CPU 48 registers the information on the fusion limit at the time of the binocular fusion range reaching the fusion limit (for example, the information on the amount of parallax of the 3D image for measurement, or the information on the convergence angle of the eyeballs, the pupil width, and the like) in the storage unit 54 in association with the face image of the viewer or with the characteristic amounts of the face image (step S38), and turns off the power source of the camera (step S40).

Returning to Fig. 6, the CPU 48, which has acquired the information on the fusion limit of the viewers as described above, outputs the information on the fusion limit of each of the viewers to the display control unit 40. The display control unit 40 outputs the L image and the R image to the stereoscopic image display unit 30 while controlling, on the basis of the information on the fusion limit of each of the viewers, the maximum amount of parallax between the L image and the R image does not exceed the fusion limit of the viewer.

For example, in the case of a 3D still image, when one of the L image and the R image is used as a reference image, and when a parallax image is to be generated from the deviation amount (parallax amount) of respective corresponding points in the reference image and the other image, the parallax image is generated in a manner that, among the parallax amounts of corresponding points, the maximum parallax amount is adjusted so as not to exceed the fusion limit of the viewer and that the parallax amount of corresponding points other than that whose parallax amount is the maximum are also adjusted according to the adjusted maximum value. Further, when the amount of processing is large as in the case of a 3D moving image, parallel movement of the L image and the R image may be performed so as to prevent the maximum parallax amount between the L image and the R image from exceeding the fusion limit of the viewer.

[Second embodiment]

Next, a second embodiment of a stereoscopic image display apparatus will be described.

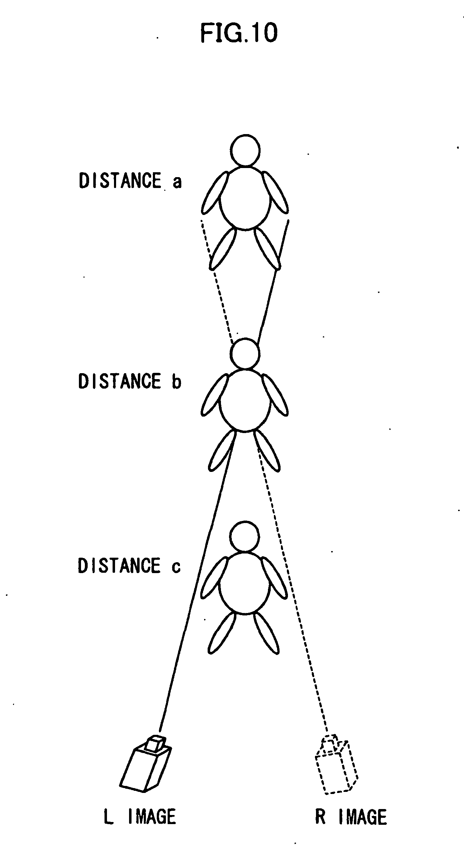

A stereoscopic image is photographed by a method shown in Fig. 10. Two cameras for respectively photographing L and R images are arranged in a state where the optical axes of the two cameras are arranged in parallel with each other or arranged to form a slight (convergence) angle, and a subject is simultaneously photographed by the two cameras to obtain a stereoscopic image.

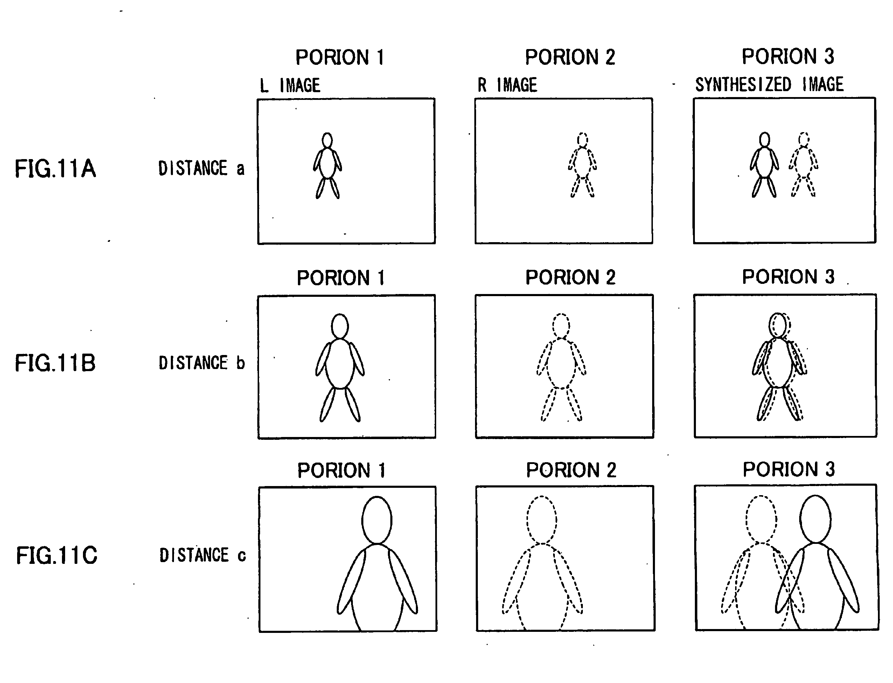

The parallax of the obtained stereoscopic image is changed according to the conditions such as an interval between the two cameras (base line length), the angle (convergence angle) formed by the optical axes, and the distance to the subject. For example, when the photographing distance is different (distances a, b and c) in the camera arrangement shown in Fig. 10, the images shown in Fig. 11A to Fig. 11C are obtained by photographing the subject at the respective distances.

In the case of the distance b, since the intersection of the optical axes of the cameras, which respectively photograph the L image and the R image, substantially coincides with the position of the subject, parallax between the photographed L and R images is small, and a synthesized image for stereoscopic display is obtained as shown in Portion 3 of Fig. 11B. Fig. 8B shows the position of the pupil of both eyes of the viewer in the case where the viewer views the stereoscopic image photographed under the condition of distance b. Although the viewer independently views the L and R images by the respective left and right eyes, the parallax between the L and R images is small, and hence the viewer recognizes the subject position at almost the same position as the display surface of the stereoscopic image display apparatus 10. In the case where the difference between the physical display surface and the display position recognized by the viewer is small in this way, it is estimated that the viewing of the images causes comparatively less asthenopia.

The subject position (pupil width $L_b$ at this time) is used as a prescribed value 1 (L1) in the stereoscopic display control as will be described below.

Next, the cases where the distance to the subject is different from the distance in the above described case will be described. When the subject located at the distance a and the subject located at the distance c are photographed under the condition of the camera arrangement shown in Fig. 10, larger parallaxes are generated between the L image and the R image unlike the case of the distance b (Portion 3 of Fig. 11A and Portion 3 of Fig. 11C).

Fig. 8A and Fig. 8C show the pupil width of the viewer in the cases where the viewer views the image at the distance a and the distance b.

In the case of Fig. 8A, due to the parallax between the L and R images, the viewer feels as if the subject is positioned on the deeper side from the display surface. On the contrary, in the case of Fig. 8C, the viewer feels as if the subject is positioned on the nearer side from the display surface. At this time, the subject position recognized by the viewer is different from the position in the physical display surface, and the viewer feels a stereoscopic effect. However, a long time viewing of such images causes asthenopia.

When stereoscopic images as shown in Fig. 8A and Fig. 8C are viewed, the pupil widths $L_a$ and $L_c$ of the viewer are changed by the parallax of the image shown in the figures. The pupil width $L_a$ in the case where the subject is recognized to be positioned on the deeper side from the display surface is larger than the pupil width $L_b$ in the case where the subject is recognized to be positioned on the display surface. The pupil width $L_c$ in the case where the subject is recognized to be positioned on the front side from the display surface is smaller than the pupil width $L_b$ in the case where the subject is recognized to be positioned on the display surface.

In the second embodiment , the pupil width between the pupils of both eyes of the viewer viewing a stereoscopic image is measured and calculated, and compared with the prescribed value L1, whereby the level of fatigue, that is, the level of asthenopia, of the viewer viewing the image is calculated. It is possible to prevent asthenopia of the viewer in a manner that the level of fatigue is accumulated during the viewing time, and that the stereoscopic display is stopped at the time when the accumulated value S representing the level of fatigue exceeds a prescribed value 2 (S1).

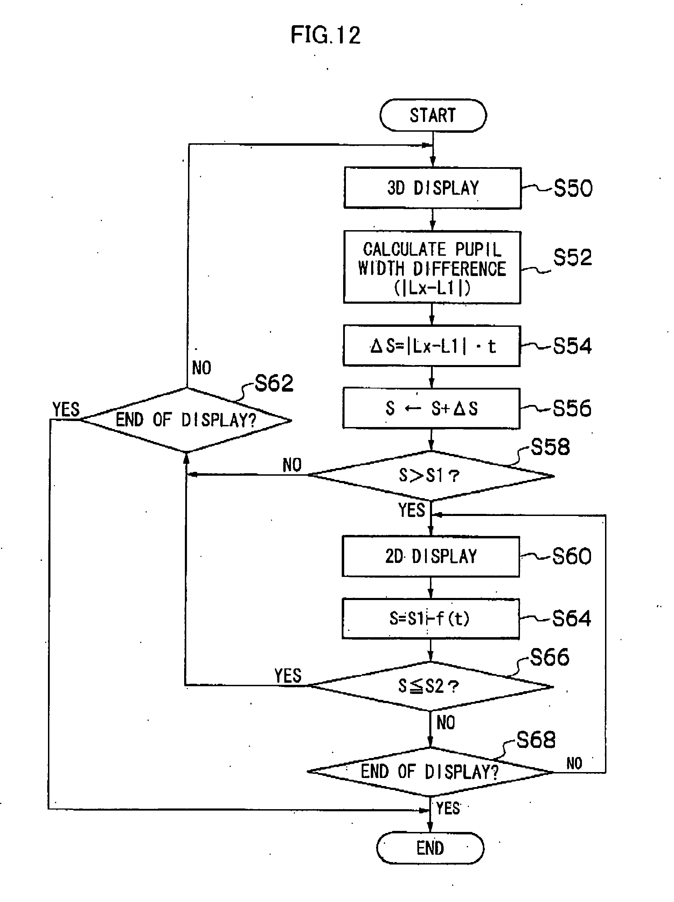

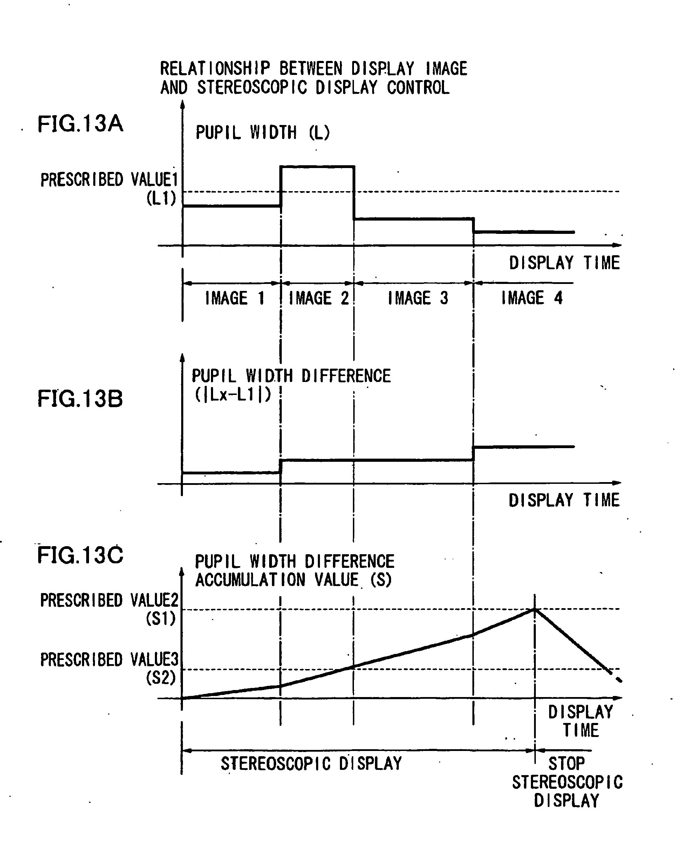

Fig. 12 is a flow chart showing a second embodiment. Here, the case where stereoscopic images 1,2,3,4,... are successively displayed as shown in Fig. 13A will be described.

The CPU 48 controls the stereoscopic image display unit 30 to display the image 1 at the start of the viewing of a stereoscopic image (step S50). Further, the CPU 48 controls the imaging unit 20 to photograph the face of the viewer, and obtains the pupil width Lx of the viewer. Then, the CPU 48 calculates an absolute value |Lx-L1| of the difference between the obtained pupil width Lx and the prescribed value L1 (step S52, Fig. 13B).

Then, the CPU 48 calculates, as an increment of fatigue ΔS, the product of the absolute value |Lx-L1| of the difference and the display time t of the image 1 (step S54).

Then, the CPU 48 calculates the accumulation value S by accumulating the increment of fatigue ΔS (step S56, Fig. 13C)). Note that the initial value of the accumulation value S is set to 0.

Then, the CPU 48 determines whether or not the accumulation value S representing the level of fatigue exceeds the prescribed value S1 set beforehand (step S58). At the time when the level of fatigue exceeds the prescribed value S1, the CPU 48 stops the 3D display, and switches from the 3D display to the 2D display in the present embodiment (step S60). The switching from the 3D display to the 2D display is performed by displaying only one of the L image and the R image.

When the level of fatigue does not exceed the prescribed value S1, the CPU 48 determines whether or not termination of the 3D display is instructed by the viewer (step S62). When termination of the 3D display is not instructed by the viewer, the CPU 48 proceeds to step S50, so as to continue the 3D display.

On the other hand, when the 3D display is stopped and switched to the 2D display, the viewer gradually recovers from asthenopia. Thus, the accumulation value S representing the level of fatigue is gradually reduced as shown in Fig. 13C (step S64).

For example, when the accumulation value S representing the level of fatigue reaches the prescribed value S1, the 3D display is stopped. Then, the accumulation value S representing the level of fatigue is reduced according to the following expression using a function f(t) which expresses the level of fatigue recovery according to the elapsed time t from the stop of the 3D display, and which is obtained beforehand.

[Expression 1]

$$S = S1 - f(t)$$

Then, the CPU 48 determines whether or not the accumulation value S calculated as described above reaches a prescribed value S2, (step S66). When the accumulation value S reaches the prescribed value S2, the CPU 48 recognizes that asthenopia is sufficiently reduced, and proceeds to step S50 via step S62 so as to return the display to the 3D display.

On the other hand, when the calculated accumulation value S is larger than the prescribed value S2, the CPU 48 recognizes that asthenopia is not sufficiently reduced, and shifts to step S60 via step S68 so as to continue the 2D display.

Note that the level of asthenopia of the viewers viewing the stereoscopic display is different for each of the viewers, and hence the prescribed value S1 which is specified as the threshold value of the level of asthenopia may be suitably set for each of the viewers. Further, it is preferred that the prescribed value S2 for determining the recovery from asthenopia is also suitably set.

Further, in the present embodiment, the images (images 1,2, ...) successively 3D displayed are still images, but the present embodiment can also be applied to the case of a 3D moving image. In this case, an accumulation value representing the level of fatigue is calculated by accumulating the product of the display time and the absolute value of the difference between the prescribed value L1 and the pupil width measured every frame of the moving image or measured every fixed time.

Further, in the present embodiment, the absolute value of the difference between the measured pupil width and the prescribed value L1 are used as it is, but the present embodiment is not limited to this. Only the difference in case where the pupil width is smaller than the prescribed value L1, may also be used. Alternatively, weighting may be performed on the difference in case where the pupil width is smaller than the prescribed value L1, and the difference in the case where the pupil width is larger than the prescribed value L1.

[Third embodiment]

Next, a third embodiment of a stereoscopic image display apparatus will be described.

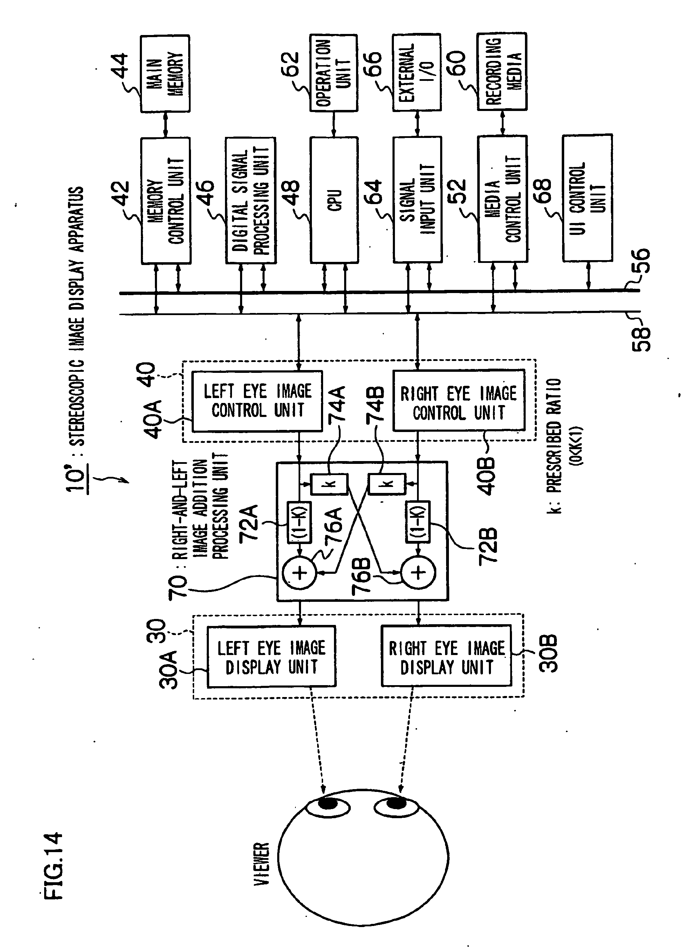

Fig. 14 is a block diagram showing an internal configuration of a stereoscopic image display apparatus according to the third embodiment. Note that the same portions as those in the block diagram shown in Fig. 2 are indicated by the same reference numerals and characters, and the detailed explanation thereof is omitted.

As shown in Fig. 14, this stereoscopic image display apparatus 10' is mainly configured by additionally including an operation unit 62, a user interface (UI) control unit 68, and a left-and-right image addition processing unit 70, as compared with the stereoscopic image display apparatus 10 shown in Fig. 2

The L and R images for left and right eyes which images are inputted from an external input and output unit (I/O) via a signal input unit 64, or the L and R images which are inputted from the recording medium 60 via the media control unit 52, are subjected to, for example, processing of image quality such as contrast and resolution, and processing of field angle, or processing of display position, and the like, by the digital signal processing unit 46, and are presented to the viewer by the stereoscopic image display unit 30 (a left eye image display unit 30A and a right eye image display unit 30B) via the display control unit 40 (a left eye image control unit 40A, and a right eye image control unit 40B) and the left-and-right image addition processing unit 70. As described above, since the left eye image and the right eye image are exclusively and respectively viewed by viewer's left and right eyes, the images are stereoscopically sensed by the viewer.

At this time, it is ideal that the left and right images are independently presented to the viewer's visual sense. However, for some stereoscopic display methods used in the stereoscopic image display unit 30, crosstalk is generated in the left and right images, so that the left and right images, into which the other side of the images is mixed, are perceived by the viewer.

The quality of a stereoscopic image is evaluated by the parameters such as the stereoscopic effect and the sense of reality, in addition to the parameters such as the resolution sense, the chromaticness and the contrast which are similarly used for the 2D image evaluation. Among them, the amount of crosstalk greatly influences the quality of the stereoscopic image.

Thus, in the stereoscopic image display apparatus 10', image information respectively sent to the left eye image display unit 30A and the right eye image display unit 30B are subject to weighted addition by the left-and-right image addition processing unit 70 so as to increase the amount of crosstalk, and the quality of the stereoscopic image in the case where crosstalk is increased can be simulated.

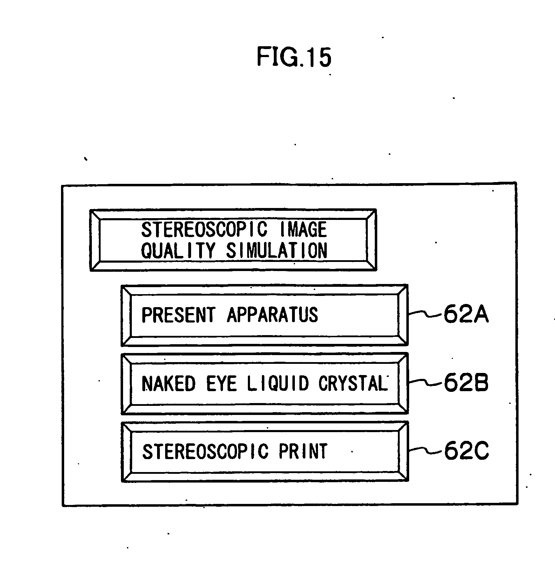

When the quality of the stereoscopic image is simulated, the stereoscopic image quality simulation menu, for example, as shown in Fig. 15, is displayed on the stereoscopic image display unit 30 via the UI control unit 68 on the basis of the operation in the operation unit 62, and then a software button for selecting an amount of crosstalk in the menu screen is operated to instruct a desired amount of crosstalk.

In the example shown in Fig. 15, the stereoscopic image quality simulation menu includes a button 62A for selecting the stereoscopic image display unit 30 of the present apparatus, a button 62B for selecting a 3D liquid crystal display to be viewed by the naked eye, and a button 62C for selecting a stereoscopic print on the surface of which a lenticular lens sheet is stuck. A user selects one of the buttons, thereby enabling the user to instruct an amount of crosstalk corresponding to the selected button. Note that the method for increasing the amount of crosstalk is not limited to the case where the kind and the like of apparatus is selected as shown in Fig. 15, a numerical value of the amount of crosstalk may also be inputted.

The left-and-right image addition processing unit 70 includes multipliers 72A and 72B which multiply the inputted image by a prescribed ratio (1-k) ($0 \le k < 1$), multipliers 74A and 74B which multiply the inputted image by a prescribed ratio k, and adders 76A and 76B which add the multiplication results. The prescribed ratio k is set according to the result of the selection of the 3D display device, which is performed by the operation unit 62.

Assuming that the image signals of the L and R images, which are respectively inputted into the multipliers 72A and 74A and the multipliers 72B and 74B, are respectively expressed as $S_L$ and $S_R$, the L image calculated by the multipliers 72A and 74B and the adder 76A in the left-and-right image addition processing unit 70, and the R image calculated by the multipliers 72B and 74A and the adder 76B in the left-and-right image addition processing unit 70, are expressed by the following expression.

**[Expression 2]**

$$\text{L image} = (1-k) \times S_L + k \times S_R$$

$$\text{R image} = (1-k) \times S_R + k \times S_L$$

The L and R images, in each of which the amount of crosstalk is increased by the left-and-right image addition processing unit 70, are respectively sent to and displayed on the left eye image display unit 30A and the right eye image display unit 30B. Thereby, the viewer can simulate the quality of the stereoscopic image having an increased amount of crosstalk by viewing the left eye image display unit 30A and the right eye image display unit 30B. For example, it is possible to simulate a stereoscopic image having an increased amount of crosstalk at a ratio of: k = 0 when a stereoscopic image displayed by the present apparatus; k = 0.1 when a stereoscopic image is displayed by the naked eye liquid crystal; and k = 0.25 when a stereoscopic image is stereoscopically printed.

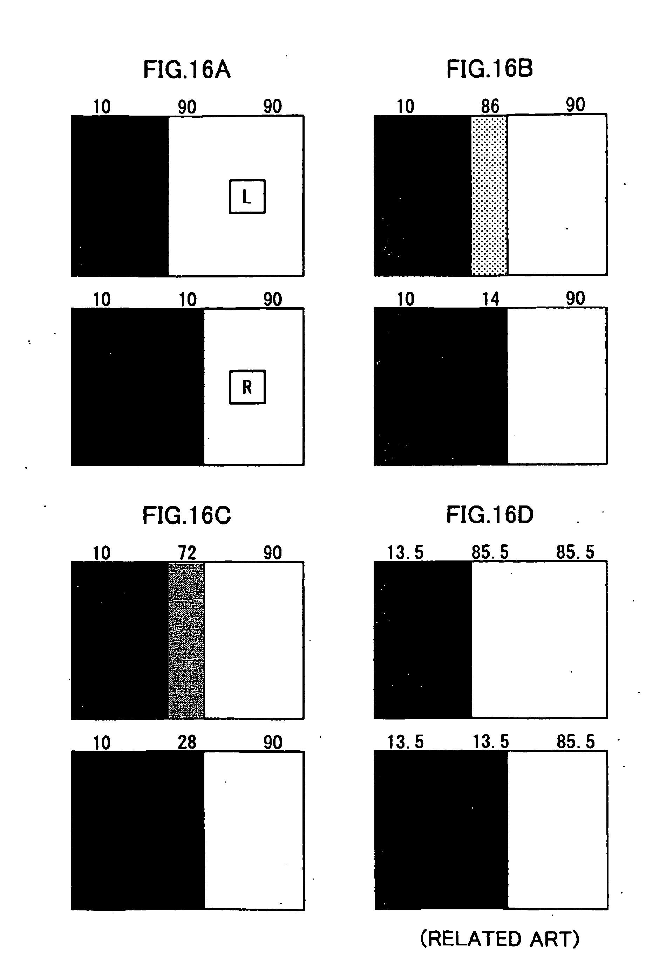

When the L and R images inputted into the left-and-right image addition processing unit 70 are the images shown in Figure 16A (images in which the region of pixel value 10 and the region of pixel value 90 exist), and when the prescribed ratio k is 5%, the pixel values 90 and 10 in the central portion in which the L and R images are mixed with each other, become 86 and 14, respectively (Fig. 16B). Further, when the prescribed ratio k is 20%, the pixel values 90 and 10 in the central portion in which the L and R images are mixed with each other, become 72 and 28, respectively (Fig. 16C).

Note that in the prior art described in Japanese Patent Application Laid-Open No. 2004-312780, the offset addition processing and the subtraction processing of the opposite image are performed in order to improve the crosstalk. Thus, the contrast is sacrificed as shown in Fig. 16D, and the simulation to increase the amount of crosstalk cannot be performed.

[Modification of third embodiment]

Next, a modification of the third embodiment of the stereoscopic image display apparatus will be described.

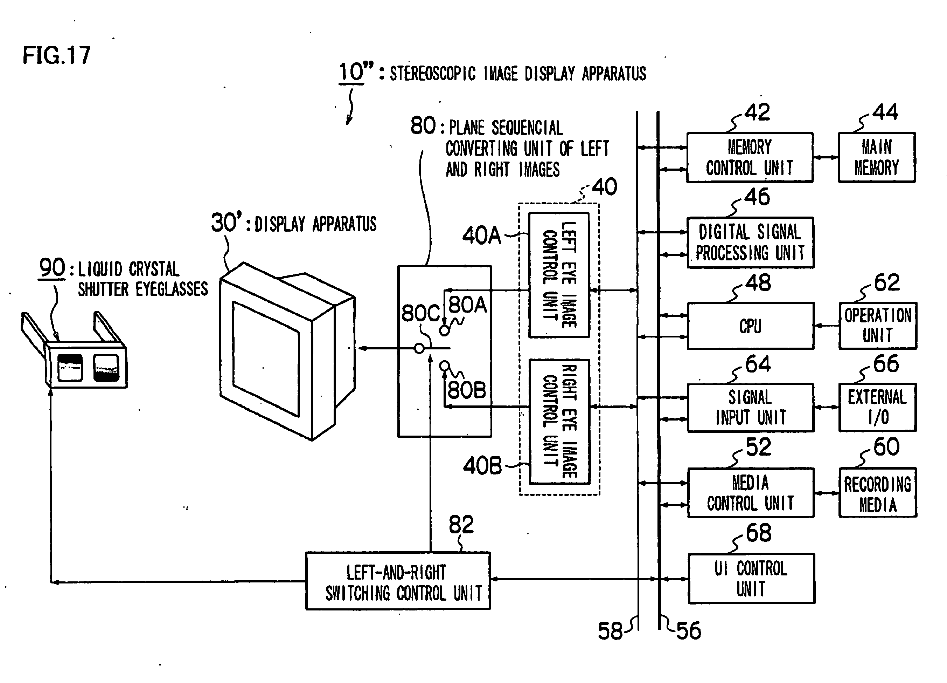

Fig. 17 is a block diagram showing an internal configuration of a stereoscopic image display apparatus according to the modification of the third embodiment. Note that the same portions as those of the block diagram shown in Fig. 14 are designated by the same reference numerals and characters, and the detailed explanation thereof is omitted.

As shown in Fig. 17, this stereoscopic image display apparatus 10" is different mainly in the stereoscopic image display system from the stereoscopic image display apparatus 10' shown in Fig. 14. The stereoscopic image display apparatus 10" includes, in place of the left-and-right image addition processing unit 70, a plane sequential converting unit 80 of left and right images, a left-and-right switching control unit 82, and liquid crystal shutter eyeglasses 90.

It is configured such that the L and R images are respectively added to contact points 80A and 80B of the plane sequential converting unit 80 from the left eye image control unit 40A and the right eye image control unit 40B, and such that a contact piece 80C controlled by the left-and-right switching control unit 82 is alternately switched and connected to one of the contact points 80A and 80B so that the L and R images are alternately outputted to a display apparatus 30', such as a CRT, and a liquid crystal display apparatus.

Further, the liquid crystal shutter eyeglasses 90 are eyeglasses provided with liquid crystal shutters for left eye and right eye (left eye and right eye liquid crystal shutters). The left-and-right switching control unit 82 alternately controls the transmittance of the left eye and right eye liquid crystal shutters in synchronization with the switching of the images in the plane sequential converting unit 80.

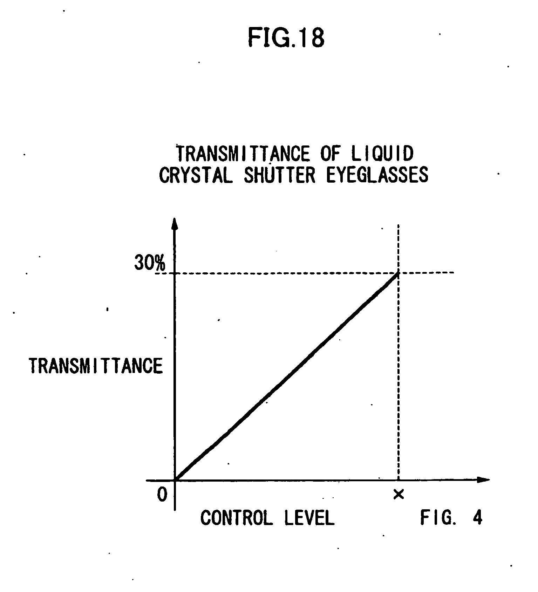

Fig. 18 shows an example of the characteristic of transmittance of the liquid crystal shutter eyeglasses 90. The transmittance of the liquid crystal shutter eyeglasses 90 is increased according to the control level inputted from the left-and-right switching control unit 82. When the control level is 0, the transmittance becomes substantially 0, while when the control level is X, the transmittance becomes substantially 30%.

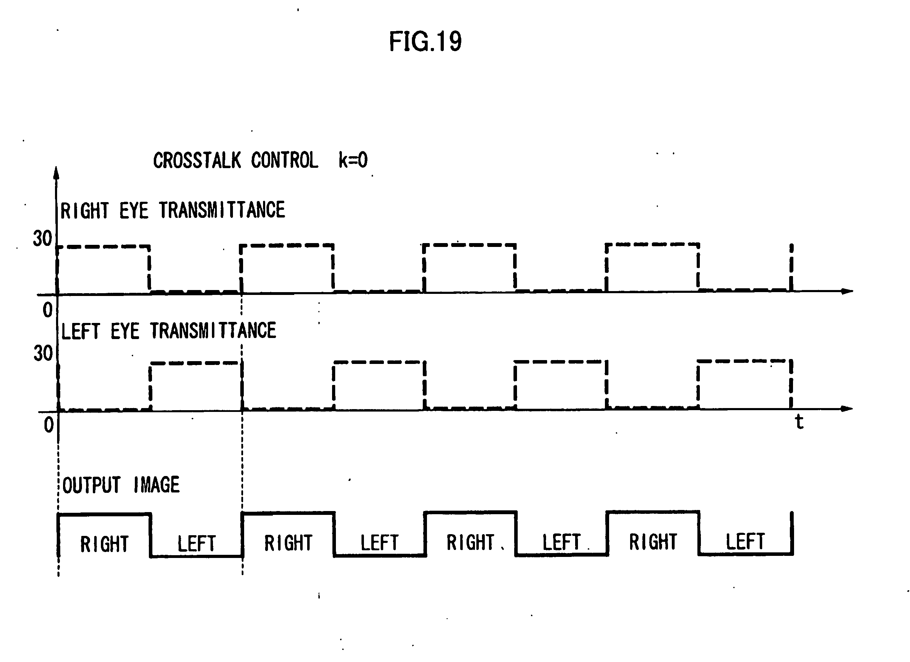

In the case of the normal stereoscopic display in which the amount of crosstalk is not controlled, the image output to the display apparatus 30' and the control timing of the liquid crystal shutters of the liquid crystal shutter eyeglasses 90 develop the timing chart shown in Fig. 19. That is, the transmittance of the left eye liquid crystal shutter is maximized at the time when the left eye image is outputted, while the transmittance of the right eye liquid crystal shutter Is maximized at the time when the right eye image is outputted.

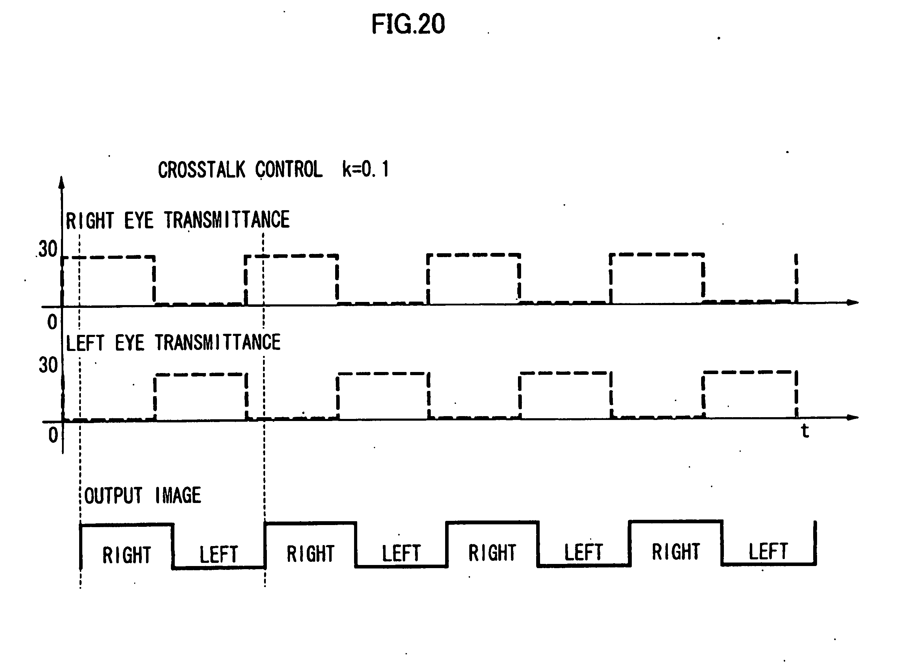

On the other hand, in the case of controlling the crosstalk, the crosstalk is controlled by performing the phase control in which the control timing of the liquid crystal shutter eyeglasses 90 is delayed (shifted) with respect to the output timing of the left eye and right eye images as shown in Figure 20.

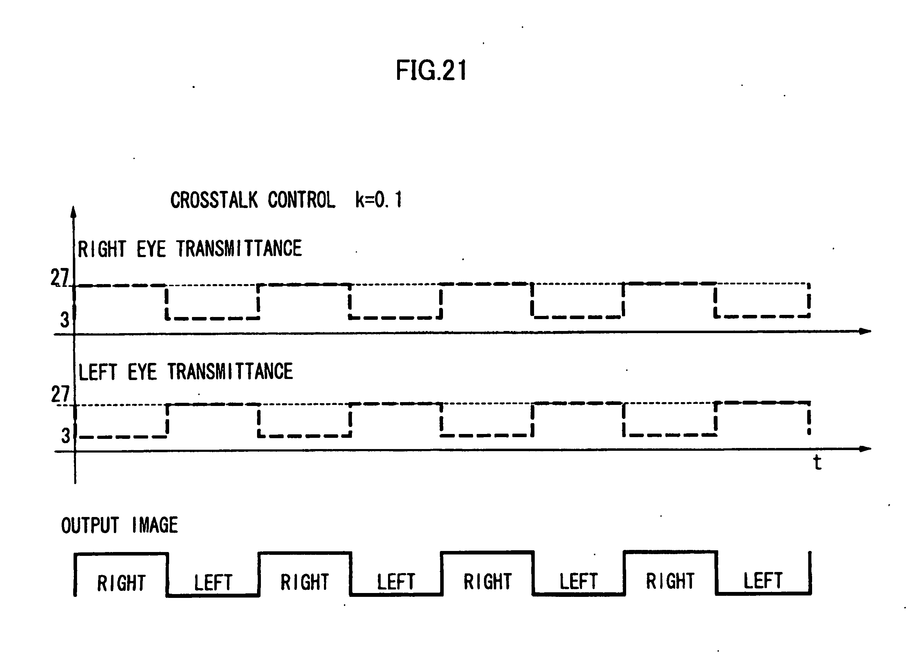

Further, it is also possible to obtain the same effect by controlling the transmittance of the liquid crystal shutter eyeglasses 90 as shown In Fig. 21. instead of delaying (shifting) the control timing of the liquid crystal shutter eyeglasses 90. That is, in the case where the prescribed ratio k is set as k = 0-1. the transmittance of the liquid crystal shutter eyeglasses 90 is alternately switched between 3% and 27%, instead of switching the transmittance of the liquid crystal shutter eyeglasses 90 between 0% and 30%.

[Others]

The present invention is not limited to the above described embodiments, and may be Implemented by suitably combining each of the embodiments. Further, it goes without saying that various modifications are possible within the scope of the present invention as defined in the claims.

**Claims**

1. A stereoscopic image display apparatus (10, 10', 10") comprising:

   a stereoscopic image display device (30);
   an information acquiring device (20, 48) which acquires information about the fusion limit of each viewer;
   an image acquiring device (48) which acquires left eye and right eye images having parallax therebetween;
   a parallax control device (40) which controls the parallax between the acquired left eye and right eye images, the parallax control device (40) controlling, on the basis of the acquired information about the fusion limit of the viewer, the parallax between the left eye and right eye images in a range not exceeding at least the fusion limit; and
   a first display control device (40) which controls the stereoscopic image display device (30) to display a stereoscopic image formed of the left eye and right eye images having the controlled parallax, wherein
   the information acquiring device (20, 48) includes:

   an imaging device (24) which photographs the face of the viewer;
   a pupil width measuring device (48) which detects left and right pupils of the viewer from the face image obtained by the photographing and measures the pupil width between the left and right pupils;
   a second display control device (48) which outputs, to the stereographic image display device (30), left eye and right eye images that enable measurement to measure the fusion limit of the viewer and that have continuously or stepwise changing parallax therebetween; and

a device (48) which acquires information about the fusion limit of the viewer on the basis of the viewer's pupil width that is measured by the pupil width measuring device (48) during the time that the images that enable measurement are displayed and on the amount of parallax of the images that enable measurement.

2. The stereoscopic image display apparatus (10, 10', 10") according to claim 1, further comprising:

a face recognizing device (50) which recognizes the face of the viewer from the face image acquired by the photographing; and

a registering device (48) which registers, in a storage device (54), the acquired information about the fusion limit of the viewer in association with the recognized face,

wherein when the viewer's face recognized by the face recognizing device (50) is a face which has been registered by the registering device (48), the information acquiring device (48) acquires the information about the fusion limit by reading out, from the storage device (54), the information about the fusion limit registered in association with the face.

3. The stereoscopic image display apparatus (10, 10', 10") according to claim 1 or 2, wherein only during a period in which the information about the fusion limit of the viewer is acquired, the power source of the imaging device (24) is turned on so as to enable the imaging device (24) to photograph the viewer.

4. The stereoscopic image display apparatus (10, 10', 10") according to any one of claims 1 to 3, further comprising:

an integration device (48) which integrates, with respect to a display time of stereoscopic image, an amount of change in the pupil width of the viewer from a prescribed value of pupil width, on the basis of the pupil width of the viewer which is measured by the pupil width measuring device while the viewer views the stereoscopic image displayed on the stereoscopic image display device (30);

a threshold setting device (48) which sets a threshold value used as a reference for determination of a level of asthenopia of the viewer viewing the stereoscopic image; and

a stopping device (48) which, when the integrated value exceeds the set threshold value, stops displaying the stereoscopic image performed by the stereoscopic image display device (30).

5. The stereoscopic image display apparatus (10, 10', 10") according to claim 4, wherein the stopping device (48) allows only one of the left eye and right eye images to be displayed on the stereoscopic image display device (30) in place of the stereoscopic image formed of the left eye and right eye images.

6. The stereoscopic image display apparatus (10, 10', 10") according to any one of claims 1 to 5, further comprising:

a crosstalk amount setting device (62, 68, 48) which sets a ratio of the right eye image mixed into the left eye image and which sets a ratio of the left eye image mixed into the right eye image; and

an image mixing device (70) which generates left eye and right eye images including the crosstalk by mixing, according to the set ratios, the left eye and right eye images acquired by the image acquiring device (48),

wherein the first control device (40) controls the stereoscopic image display device (30) to display a stereoscopic image formed of the generated left eye and right eye images including the crosstalk.

7. The stereoscopic image display apparatus (10, 10', 10") according to any one of claims 1 to 5, wherein the stereoscopic image display device (30) includes:

an image display device (30') which displays left eye and right eye images by switching the left eye and right eye images alternately; and

stereoscopic viewing eyeglasses (90) which can switch, alternately, transmittance of light beams respectively entering the left and right eyes of the viewer, and

the first display control device (40, 80, 82) which controls the image display device to display the left eye and right eye images acquired by the image acquiring device (48) alternately at a predetermined period, and which controls the transmittance of the stereoscopic viewing eyeglasses (90) to switch alternately at the predetermined period.

8. The stereoscopic image display apparatus (10, 10', 10") according to claim 7, further comprising:

a crosstalk amount setting device (62, 68, 48) which sets a ratio of the right eye image mixed into the left eye image and which sets a ratio of the left eye image mixed into the right eye image;

and
a phase control device (80) which shifts, based on the ratios set by the crosstalk amount setting device (62, 68, 48), the switching timing of the left eye and right eye images displayed on the image display device (30') from the switching timing of the transmittance of the stereoscopic viewing eyeglasses (90).

9. The stereoscopic image display apparatus (10, 10', 10") according to claim 7, further comprising:

a crosstalk amount setting device (62, 68, 48) which sets a ratio of the right eye image mixed into the left eye image and which sets a ratio of the left eye image mixed into the right eye image; and
a transmittance control device (82) which controls the ratios of the transmittance of the right and left stereoscopic viewing eyeglasses (90) on the basis of the ratios set by the crosstalk amount setting device (62, 68, 48).

**Patentansprüche**

1. Stereobildanzeigegerät (10, 10', 10"), das Folgendes umfasst:

eine Stereobildanzeigevorrichtung (30);
eine Informationserfassungsvorrichtung (20, 48), die Informationen über die Fusionsgrenze jedes Betrachters erfasst;
eine Bilderfassungsvorrichtung (48), die ein Linksaugenbild und ein Rechtsaugenbild mit Parallaxe dazwischen erfasst;
eine Parallaxensteuerungsvorrichtung (40), die die Parallaxe zwischen dem erfassten Linksaugenbild und Rechtsaugenbild steuert, wobei die Parallaxensteuerungsvorrichtung (40) auf der Basis der erfassten Informationen über die Fusionsgrenze des Betrachters die Parallaxe zwischen dem Linksaugenbild und dem Rechtsaugenbild in einem Bereich steuert, der mindestens die Fusionsgrenze nicht überschreitet; und
eine erste Anzeigesteuerungsvorrichtung (40), die die Stereoanzeigevorrichtung (30) dazu steuert, ein aus dem Linksaugenbild und dem Rechtsaugenbild mit der gesteuerten Parallaxe gebildetes Stereobild anzuzeigen, wobei die Informationserfassungsvorrichtung (20, 48) Folgendes umfasst:

eine Abbildungsvorrichtung (24), die das Gesicht des Betrachters fotografiert; eine Pupillenabstands-Messvorrichtung (48), die die linke und die rechte Pupille des Betrachters aus dem durch das Fotografieren erhaltenen Gesichtsbild erkennt und den Pupillenabstand zwischen der linken und der rechten Pupille misst;
eine zweite Anzeigesteuerungsvorrichtung (48), die ein Linksaugenbild und ein Rechtsaugenbild an die Stereobildanzeigevorrichtung (30) ausgibt, die eine Messung ermöglichen, um die Fusionsgrenze des Betrachters zu messen und die eine sich kontinuierlich oder stufenweise verändernde Parallaxe dazwischen aufweisen; und
eine Vorrichtung (48), die Informationen über die Fusionsgrenze des Betrachters auf der Basis des Pupillenabstands des Betrachters, der von der Pupillenabstands-Messvorrichtung (48) während der Zeit gemessen wird, in der die die Messung ermöglichenden Bilder angezeigt werden, und auf dem Maß an Parallaxe der die Messung ermöglichenden Bilder erfasst.

2. Stereobildanzeigegerät (10, 10', 10") nach Anspruch 1, das weiter Folgendes umfasst:

eine Gesichtserkennungsvorrichtung (50), die das Gesicht des Betrachters aus dem durch das Fotografieren erfassten Gesichtsbild erkennt; und
eine Registrierungsvorrichtung (48), die in einer Speichervorrichtung (54) die erfassten Informationen über die Fusionsgrenze des Betrachters in Zusammenhang mit dem erkannten Gesicht registriert,
wobei, wenn es sich bei dem von der Gesichtserkennungsvorrichtung (50) erkannten Gesicht des Betrachters um ein Gesicht handelt, das von der Registrierungsvorrichtung (48) registriert wurde, die
Informationserfassungsvorrichtung (48) die Informationen über die Fusionsgrenze erfasst, indem sie die in Zusammenhang mit dem Gesicht registrierten Informationen über die Fusionsgrenze aus der Speichervorrichtung (54) ausliest.

3. Stereobildanzeigegerät (10, 10', 10") nach Anspruch 1 oder 2, wobei nur während einer Periode, in der die Informationen über die Fusionsgrenze des Betrachters erfasst werden, die Leistungsquelle der Abbildungsvorrichtung (24) eingeschaltet ist, um es der Abbildungsvorrichtung (24) zu ermöglichen, den Betrachter zu fotografieren.

4. Stereobildanzeigegerät (10, 10', 10") nach einem der Ansprüche 1 bis 3, das weiter Folgendes umfasst:

eine Integrationsvorrichtung (48), die in Bezug auf eine Anzeigezeit des Stereobilds ein Änderungsmaß des Pupillenabstands des Betrachters von einem vorgegebenen Pupillenabstand auf der Basis des von der Pupillenabstands-Messvorrichtung gemessenen Pupillenabstands des Betrachters integriert, während der Betrachter das auf der Stereobildanzeigevorrichtung (30) angezeigte Stereobild betrachtet; eine Schwellenwert-Einstellvorrichtung (48), die einen Schwellenwert einstellt, der als Bezug für die Bestimmung eines Grads an Asthenopie des das Stereobild betrachtenden Betrachters verwendet wird; und eine Unterbindungsvorrichtung (48), die, wenn der integrierte Wert den eingestellten Schwellenwert übersteigt, das von der Stereobildanzeigevorrichtung (30) ausgeführte Anzeigen des Stereobilds unterbindet.

5. Stereobildanzeigegerät (10, 10', 10") nach Anspruch 4, wobei die Unterbindungsvorrichtung (48) nur zulässt, dass auf der Stereobildanzeigevorrichtung (30) das Linksaugenbild oder das Rechtsaugenbild anstelle des aus dem Linksaugenbild und dem Rechtsaugenbild gebildeten Stereobilds angezeigt wird.

6. Stereobildanzeigegerät (10, 10', 10") nach einem der Ansprüche 1 bis 5, das weiter Folgendes umfasst:

eine Überlagerungsmaß-Einstellvorrichtung (62, 68, 48), die ein Verhältnis des in das Linksaugenbild gemischten Rechtsaugenbilds einstellt und die ein Verhältnis des in das Rechtsaugenbild gemischten Linksaugenbilds einstellt; und eine Bildmischvorrichtung (70), die ein die Überlagerung umfassendes Linksaugenbild und Rechtsaugenbild erzeugt, indem sie gemäß den eingestellten Verhältnissen das von der Bilderfassungsvorrichtung (48) erfasste Linksaugenbild und Rechtsaugenbild mischt, wobei die erste Steuerungsvorrichtung (40), die Stereoanzeigevorrichtung (30) dazu steuert, ein die Überlagerung umfassendes, aus dem erzeugten Linksaugenbild und dem erzeugten Rechtsaugenbild gebildetes Stereobild anzuzeigen.

7. Stereobildanzeigegerät (10, 10', 10") nach einem der Ansprüche 1 bis 5, wobei die Stereobildanzeigevorrichtung (30) Folgendes umfasst:

eine Bildanzeigevorrichtung (30'), die ein Linksaugenbild und ein Rechtsaugenbild anzeigt, indem sie das Linksaugenbild und das Rechtsaugenbild abwechselnd umschaltet, und eine Stereobetrachtungsbrille (90), die abwechselnd die Durchlässigkeit für Lichtstrahlen umschalten kann, die in das linke bzw. das rechte Auge des Betrachters eindringen, und die erste Anzeigesteuerungsvorrichtung (40, 80, 82), die die Bildanzeigevorrichtung dazu steuert, das von der Bilderfassungsvorrichtung (48) erfasste Linksaugenbild und Rechtsaugenbild abwechselnd zu einer vorherbestimmten Periode anzuzeigen und die die Durchlässigkeit der Stereobetrachtungsbrille (90) dazu steuert, abwechselnd zu der vorherbestimmten Periode umzuschalten.

8. Stereobildanzeigegerät (10, 10', 10") nach Anspruch 7, das weiter Folgendes umfasst:

eine Überlagerungsmaß-Einstellvorrichtung (62, 68, 48), die ein Verhältnis des in das Linksaugenbild gemischten Rechtsaugenbilds einstellt und die ein Verhältnis des in das Rechtsaugenbild gemischten Linksaugenbilds einstellt; und eine Phasensteuerungsvorrichtung (80), die basierend auf den von der Überlagerungsmengen-Einstellvorrichtung (62, 68, 48) eingestellten Verhältnissen, die Umschaltzeiten des Linksaugenbilds und des Rechtsaugenbilds, die auf der Bildanzeigevorrichtung (30') angezeigt werden, von den Umschaltzeiten der Durchlässigkeit der Stereobetrachtungsbrille (90) verschiebt.

9. Stereobildanzeigevorrichtung (10, 10', 10") nach Anspruch 7, die weiter Folgendes umfasst:

eine Überlagerungsmengen-Einstellvorrichtung (62, 68, 48), die ein Verhältnis des in das Linksaugenbild gemischten Rechtsaugenbilds einstellt und die ein Verhältnis des in das Rechtsaugenbild gemischten Linksaugenbilds einstellt; und eine Durchlässigkeits-Steuerungsvorrichtung (82), die die Verhältnisse der Durchlässigkeit des rechten und des linken Stereobetrachtungs-Brillenglases (90) auf der Basis der von der Überlagerungsmengen-Einstellvorrichtung (62, 68, 48) eingestellten Verhältnisse steuert.

**Revendications**

1. Appareil d'affichage d'images stéréoscopiques (10, 10', 10") comprenant :

un dispositif d'affichage d'images stéréoscopiques (30) ;

un dispositif d'acquisition d'informations (20, 48) qui acquiert des informations sur la limite de fusion de chaque observateur ;

un dispositif d'acquisition d'images (48) qui acquiert des images de l'oeil droit et de l'oeil gauche ayant un parallaxe entre elles ;

un dispositif de contrôle de parallaxe (40) qui contrôle le parallaxe entre les images de l'oeil droit et de l'oeil gauche acquises, le dispositif de contrôle de parallaxe (40) contrôlant, sur la base des informations acquises sur la limite de fusion de l'observateur, le parallaxe entre les images de l'oeil droit et de l'oeil gauche dans une plage ne dépassant pas au moins la limite de fusion ; et

un premier dispositif de commande d'affichage (40) qui commande au dispositif d'affichage d'images stéréoscopiques (30) d'afficher d'une image stéréoscopique formée à partir des images de l'oeil gauche et de l'oeil droit ayant le parallaxe contrôlé, dans lequel

le dispositif d'acquisition d'informations (20, 48) comprend :

un dispositif d'imagerie (24) qui photographie le visage de l'observateur ;

un dispositif de mesure de largeur entre pupilles (48) qui détecte les pupilles gauche et droite de l'observateur à partir de l'image du visage obtenue par la prise de vue et mesure la largeur entre pupilles entre les pupilles gauche et droite ;

un second dispositif de commande d'affichage (48) qui produit en sortie, vers le dispositif d'affichage d'images stéréographiques (30), des images de l'oeil gauche et de l'oeil droit qui permettent la mesure pour mesurer la limite de fusion de l'observateur et qui ont entre elles un parallaxe changeant en continu ou par paliers ; et

un dispositif (48) qui acquiert des informations sur la limite de fusion de l'observateur sur la base de la largeur de pupille de l'observateur qui est mesurée par le dispositif de mesure de largeur de pupille (48) durant le moment où les images qui permettent la mesure sont affichées et sur la quantité de parallaxe des images qui permettent la mesure.

2. Appareil d'affichage d'images stéréoscopiques (10, 10', 10") selon la revendication 1, comprenant en outre :

un dispositif de reconnaissance de visage (50) qui reconnaît le visage de l'observateur à partir de l'image du visage acquise par la prise de vue ; et

un dispositif d'enregistrement (48) qui enregistre, dans un dispositif de stockage (54), les informations acquises sur la limite de fusion de l'observateur en association avec le visage reconnu,

dans lequel lorsque le visage de l'observateur reconnu par le dispositif de reconnaissance de visage (50) est un visage qui a été enregistré par le dispositif d'enregistrement (48), le dispositif d'acquisition d'informations (48) acquiert les informations sur la limite de fusion par la lecture, à partir du dispositif de stockage (54), des informations sur la limite de fusion enregistrée en association avec le visage.

3. Appareil d'affichage d'images stéréoscopiques (10, 10', 10") selon la revendication 1 ou 2, dans lequel uniquement sur une période pendant laquelle les informations sur la limite de fusion de l'observateur sont acquises, la source d'alimentation du dispositif d'imagerie (24) est mise sous tension de sorte à permettre au dispositif d'imagerie (24) de photographier l'observateur.

4. Appareil d'affichage d'images stéréoscopiques (10, 10', 10") selon l'une quelconque des revendications 1 à 3, comprenant en outre :

un dispositif d'intégration (48) qui intègre, par rapport à un temps d'affichage d'image stéréoscopique, une quantité de changement de la largeur entre pupilles de l'observateur à partir d'une valeur déterminée de largeur entre pupilles, sur la base de la largeur entre pupilles de l'observateur qui est mesurée par le dispositif de mesure de largeur entre pupilles alors que l'observateur observe l'image stéréoscopique affichée sur le dispositif d'affichage d'images stéréoscopiques (30) ;

un dispositif de définition de seuil (48) qui définit une valeur de seuil utilisée en tant que référence pour la détermination d'un niveau d'asthénopie de l'observateur observant l'image stéréoscopique ; et

un dispositif d'arrêt (48) qui, lorsque la valeur intégrée dépasse la valeur de seuil définie, arrête l'affichage de l'image stéréoscopique effectué par le dispositif d'affichage d'images stéréoscopiques (30).

5. Appareil d'affichage d'images stéréoscopiques (10, 10', 10") selon la revendication 4, dans lequel le dispositif d'arrêt (48) permet à une seule des images de l'oeil gauche et de l'oeil droit d'être affichée sur le dispositif d'affichage d'images stéréoscopiques (30) à la place de l'image stéréoscopique formée des images de l'oeil gauche et de l'oeil droit.

**6.** Appareil d'affichage d'images stéréoscopiques (10, 10', 10") selon l'une quelconque des revendications 1 à 5, comprenant en outre :

un dispositif de définition de quantité de diaphonie (62, 68, 48) qui définit un rapport de l'image de l'oeil droit mélangée dans l'image de l'oeil gauche et définit un rapport de l'image de l'oeil gauche mélangée dans l'image de l'oeil droit ; et
un dispositif de mélange d'images (70) qui génère des images de l'oeil gauche et de l'oeil droit incluant la diaphonie en mélangeant, selon les rapports définis, les images de l'oeil gauche et de l'oeil droit acquises par le dispositif d'acquisition d'images (48),
dans lequel le premier dispositif de commande (40) commande au dispositif d'affichage d'images stéréoscopiques (30) d'afficher une image stéréoscopique formée à partir des images de l'oeil gauche et de l'oeil droit générées incluant la diaphonie.

**7.** Appareil d'affichage d'images stéréoscopiques (10, 10', 10") selon l'une quelconque des revendications 1 à 5, dans lequel
le dispositif d'affichage d'images stéréoscopiques (30) comprend :

un dispositif d'affichage d'images (30') qui affiche des images de l'oeil gauche et de l'oeil droit en commutant les images de l'oeil gauche et de l'oeil droit en alternance ; et
des lunettes d'observation stéréoscopique (90) qui peuvent commuter, en alternance, la transmittance de faisceaux lumineux entrant respectivement dans les yeux gauche et droit de l'observateur, et
le premier dispositif de commande d'affichage (40, 80, 82) qui commande l'affichage par le dispositif d'affichage d'images des images de l'oeil gauche et de l'oeil droit acquises par le dispositif d'acquisition d'images (48) en alternance à une période prédéterminée, et qui commande la commutation en alternance de la transmittance des lunettes d'observation stéréoscopique (90) à la période prédéterminée.

**8.** Appareil d'affichage d'images stéréoscopiques (10, 10', 10") selon la revendication 7, comprenant en outre :

un dispositif de définition de quantité de diaphonie (62, 68, 48) qui définit un rapport de l'image de l'oeil droit mélangée dans l'image de l'oeil gauche et qui définit un rapport de l'image de l'oeil gauche mélangée dans l'image de l'oeil droit ; et
un dispositif de contrôle de phase (80) qui décale, sur la base des rapports définis par le dispositif de définition de quantité de diaphonie (62, 68, 48), le temps de commutation des images de l'oeil gauche et de l'oeil droit affichées sur le dispositif d'affichage d'images (30') à partir du temps de commutation de la transmittance des lunettes d'observation stéréoscopique (90).

**9.** Appareil d'affichage d'images stéréoscopiques (10, 10', 10") selon la revendication 7, comprenant en outre :

un dispositif de définition de quantité de diaphonie (62, 68, 48) qui définit un rapport de l'image de l'oeil droit mélangée dans l'image de l'oeil gauche et qui définit un rapport de l'image de l'oeil gauche mélangée dans l'image de l'oeil droit ; et
un dispositif de contrôle de transmittance (82) qui contrôle les rapports de la transmittance des lunettes d'observation stéréoscopique (90) sur la base des rapports définis par le dispositif de définition de quantité de diaphonie (62, 68, 48).

# FIG.1

10 : STEREOSCOPIC IMAGE DISPLAY APPARATUS

20 : IMAGING UNIT

30 : STEREOSCOPIC IMAGE DISPLAY UNIT

VIEWER

FIG.2

10 : STEREOSCOPIC IMAGE DISPLAY APPARATUS

20

24 : SOLID-STATE IMAGING ELEMENT

26

| IMAGING ELEMENT DRIVING/ IMAGING SIGNAL PROCESSING UNIT |

22 : LENS

IMAGING UNIT

42

| MEMORY CONTROL UNIT |

44

| MAIN MEMORY |

| DIGITAL SIGNAL PROCESSING UNIT | ~46

| CPU | ~48

| FACE RECOGNITION PROCESSING UNIT | ~50

60

52

| MEDIA CONTROL UNIT |

| RECORDING MEDIA |

30

40

| STEREOSCOPIC IMAGE DISPLAY UNIT |

| DISPLAY CONTROL UNIT |

| STORAGE UNIT | ~54

58 56

FIG.3

32 : FLAT DISPLAY
APPARATUS

34 : BARRIER

FIG.4

32 : FLAT DISPLAY APPARATUS

34 : BARRIER

LEFT EYE    RIGHT EYE

# FIG.5

### PORTION 1

L IMAGE

### PORTION 2

R IMAGE

### PORTION 3

STEREOSCOPIC DISPLAY IMAGE

# FIG.6

START

ACQUIRE INFORMATION ON
FUSION LIMIT OF VIEWER ⟶ S10

CONTROL PARALLAX OF 3D
IMAGE ACCORDING TO
FUSION LIMIT OF EACH VIEWER ⟶ S12

3D IMAGE DISPLAY ⟶ S14

S16
NO ◇ END OF DISPLAY?

YES

END

FIG.7

START

TURN ON CAMERA POWER SOURCE — S20

PHOTOGRAPH VIEWER'S FACE — S22

RECOGNIZE FACE — S24

IS FACE REGISTERED? — S26

YES → READ INFORMATION ON FUSION LIMIT OF VIEWER — S28

NO

DISPLAY 3D IMAGE FOR MEASUREMENT OF FUSION LIMIT — S30

PHOTOGRAPH VIEWER'S FACE — S32

MEASURE PUPIL WIDTH — S34

FUSION RANGE REACHES FUSION LIMIT? — S36

NO

YES

REGISTER INFORMATION ON FUSION LIMIT OF VIEWER — S38

TURN OFF CAMERA POWER SOURCE — S40

END

FIG.8A                    FIG.8B                    FIG.8C

# FIG.9

DISPLAY
SURFACE

$\alpha_b$

Lb

# FIG.10

## PORION 1
L IMAGE

## PORION 2
R IMAGE

## PORION 3
SYNTHESIZED IMAGE

FIG.11A    DISTANCE a

## PORION 1

## PORION 2

## PORION 3

FIG.11B    DISTANCE b

## PORION 1

## PORION 2

## PORION 3

FIG.11C    DISTANCE c

# FIG.12

```
                        START

                     3D DISPLAY          ～S50

                  CALCULATE PUPIL
                  WIDTH DIFFERENCE       ～S52
                      (|Lx−L1|)

                  ΔS=|Lx−L1|・t          ～S54

              NO      S62     S ← S+ΔS   ～S56
   YES
         END OF DISPLAY?
                              S58
              NO
                          S>S1 ?
                             YES

                     2D DISPLAY          ～S60

                     S=S1−f(t)           ～S64

                              S66
              YES
                          S≦S2 ?
                             NO
                              S68
         END OF DISPLAY?              NO
                             YES

                        END
```

27

RELATIONSHIP BETWEEN DISPLAY IMAGE
AND STEREOSCOPIC DISPLAY CONTROL

FIG.13A

PUPIL WIDTH (L)

PRESCRIBED VALUE1
(L1)

DISPLAY TIME

| IMAGE 1 | IMAGE 2 | IMAGE 3 | IMAGE 4 |

FIG.13B

PUPIL WIDTH DIFFERENCE
($|Lx-L1|$)

DISPLAY TIME

FIG.13C

PUPIL WIDTH DIFFERENCE
ACCUMULATION VALUE (S)

PRESCRIBED VALUE2
(S1)

PRESCRIBED VALUE3
(S2)

DISPLAY
TIME

STEREOSCOPIC DISPLAY            STOP
                          STEREOSCOPIC
                             DISPLAY

28

FIG.14

$10'$ : STEREOSCOPIC IMAGE DISPLAY APPARATUS

VIEWER

30A / 30
LEFT EYE IMAGE DISPLAY UNIT

70 : RIGHT-AND-LEFT IMAGE ADDITION PROCESSING UNIT

72A
$(1-K)$

76A

74A
$k$

40A / 40
LEFT EYE IMAGE CONTROL UNIT

30B
RIGHT EYE IMAGE DISPLAY UNIT

76B

72B
$(1-K)$

74B
$k$

40B
RIGHT EYE IMAGE CONTROL UNIT

$k$: PRESCRIBED RATIO
$(0<K<1)$

42
MEMORY CONTROL UNIT

44
MAIN MEMORY

46
DIGITAL SIGNAL PROCESSING UNIT

48
CPU

62
OPERATION UNIT

64
SIGNAL INPUT UNIT

66
EXTERNAL I/O

52
MEDIA CONTROL UNIT

60
RECORDING MEDIA

68
UI CONTROL UNIT

58    56

EP 2 299 728 B1

# FIG.15

STEREOSCOPIC IMAGE
QUALITY SIMULATION

PRESENT APPARATUS ～62A

NAKED EYE LIQUID CRYSTAL ～62B

STEREOSCOPIC PRINT ～62C

## FIG.16A

## FIG.16B

## FIG.16C

## FIG.16D

(RELATED ART)

**FIG.17**

10'' : STEREOSCOPIC IMAGE DISPLAY APPARATUS

80 : PLANE SEQUENCIAL CONVERTING UNIT OF LEFT AND RIGHT IMAGES

30' : DISPLAY APPARATUS

90 : LIQUID CRYSTAL SHUTTER EYEGLASSES

40

40A — LEFT EYE IMAGE CONTROL UNIT

40B — RIGHT EYE IMAGE CONTROL UNIT

80C / 80A / 80B

42 — MEMORY CONTROL UNIT

44 — MAIN MEMORY

46 — DIGITAL SIGNAL PROCESSING UNIT

48 — CPU

62 — OPERATION UNIT

64 — SIGNAL INPUT UNIT

66 — EXTERNAL I/O

52 — MEDIA CONTROL UNIT

60 — RECORDING MEDIA

68 — UI CONTROL UNIT

82 — LEFT-AND-RIGHT SWITCHING CONTROL UNIT

58 / 56

EP 2 299 728 B1

# FIG.18

**TRANSMITTANCE OF LIQUID
CRYSTAL SHUTTER EYEGLASSES**

FIG. 4

# FIG.19

CROSSTALK CONTROL  k=0

RIGHT EYE TRANSMITTANCE

LEFT EYE TRANSMITTANCE

OUTPUT IMAGE

RIGHT    LEFT    RIGHT    LEFT    RIGHT    LEFT    RIGHT    LEFT

EP 2 299 728 B1

FIG.20

CROSSTALK CONTROL k=0.1

RIGHT EYE TRANSMITTANCE

30

0

LEFT EYE TRANSMITTANCE

30

0

t

OUTPUT IMAGE

RIGHT | LEFT | RIGHT | LEFT | RIGHT | LEFT | RIGHT | LEFT

EP 2 299 728 B1

FIG.21

EP 2 299 728 B1

CROSSTALK CONTROL  k=0.1

RIGHT EYE TRANSMITTANCE

27

3

LEFT EYE TRANSMITTANCE

27

3

t

OUTPUT IMAGE

RIGHT | LEFT | RIGHT | LEFT | RIGHT | LEFT | RIGHT | LEFT

**REFERENCES CITED IN THE DESCRIPTION**

**Patent documents cited in the description**

- JP 3771964 B
- JP 9074573 A
- JP 2004165709 A
- JP 2001186549 A
- JP 2004312780 A
- DE 102007028654